(19) **Europäisches Patentamt European Patent Office Office européen des brevets**

(11) **EP 3 783 571 B1**

(12) **EUROPEAN PATENT SPECIFICATION**

(45) Date of publication and mention of the grant of the patent:
**26.11.2025 Bulletin 2025/48**

(21) Application number: **19788578.3**

(22) Date of filing: **06.03.2019**

(51) International Patent Classification (IPC):
***G06T 13/40*** *(2011.01)*

(52) Cooperative Patent Classification (CPC):
**G06T 17/00; G06T 7/50; G06T 13/40; G06T 19/20; G06V 40/171;** G06T 2207/30201; G06T 2219/2004; G06T 2219/2008; G06T 2219/2012; G06T 2219/2021

(86) International application number:
**PCT/CN2019/077221**

(87) International publication number:
**WO 2019/201027 (24.10.2019 Gazette 2019/43)**

(54) **THREE-DIMENSIONAL FACE MODELING INCLUDING ORAL CAVITY**

DREIDIMENSIONALE MODELLIERUNG EINES GESICHTS EINSCHLIESSLICH DER MUNDHÖHLE

MODÉLISATION EN TROIS DIMENSIONS D'UN VISAGE COMPRENANT LA CAVITÉ BUCCALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2018 CN 201810349627**

(43) Date of publication of application:
**24.02.2021 Bulletin 2021/08**

(73) Proprietor: **Tencent Technology (Shenzhen) Company Limited Shenzhen, Guangdong, 518057 (CN)**

(72) Inventors:
- **PENG, Weilong Shenzhen, Guangdong 518057 (CN)**
- **LI, Chen Shenzhen, Guangdong 518057 (CN)**
- **TAI, Yu Wing Shenzhen, Guangdong 518057 (CN)**
- **SHEN, Xiaoyong Shenzhen, Guangdong 518057 (CN)**
- **JIA, Jiaya Shenzhen, Guangdong 518057 (CN)**

(74) Representative: **Novagraaf International SA Chemin de l'Echo 3 1213 Onex, Geneva (CH)**

(56) References cited:
CN-A- 1 889 129     CN-A- 102 426 712
CN-A- 104 318 615    CN-A- 105 719 326
CN-A- 106 327 571    CN-A- 106 652 015
CN-A- 107 657 664    CN-A- 107 657 664
CN-A- 108 537 881

## Description

FIELD

This invention relates to the technical field of computer-implemented face modeling.

BACKGROUND

Facial expression synthesis is one type of face synthesis technologies, which is applied to the field of computer graphics such as movies, games, human-computer interaction and face recognition, and may be applied to various scenarios.

However, according to the conventional face synthesis technology, an oral cavity is partially absent when the oral cavity is in an opening form in a synthesized face picture. To complement the oral cavity, an oral cavity two-dimensional (2D) synthesis method and an oral cavity 3-dimensional (3D) synthesis method are generally adopted in the conventional technical solutions.

The oral cavity 2D synthesis method includes: detecting a face region of an original picture and obtaining an oral cavity region through segmentation; then searching a database for an oral cavity picture close to a skin color of the face region, and filling the found oral cavity picture in the oral cavity region. However, it cannot be ensured that the oral cavity picture obtained by using this method is completely consistent with an oral cavity form in the original picture, resulting in that an effect of a fused picture is poor. The oral cavity 3D synthesis method includes: detecting feature points of a face in an original picture; then generating a 3D face model corresponding to the face, and directly fusing a 3D oral cavity model into the 3D face model. However, because a size, brightness, an opening and closing form, and the like of the 3D oral cavity model are difficult to keep consistent with those of the face model, the synthesized image is difficult to be realistic for the oral cavity. Therefore, the oral cavity synthesis methods in the conventional art often cause distortion, and have poor synthesis effects.

CN107657664A relates to an image optimization method and device after facial expression synthesis, a storage medium and a computer device. The method is characterized by, to begin with, making a 3D tooth model, and obtaining a 3D synthesis face model after expression transfer; then, carrying out transform operation on the tooth model to enable the tooth model obtained after transform operation to be flush with the synthesis face model, that is, the tooth model changes correspondingly with opening of a mouth in the synthesis face model to achieve an effect of being more close to reality; and finally, converting the tooth model obtained after transform operation into a 2D image, converting the synthesis face model into a 2D image, and fusing the 2D image corresponding to the tooth model to the 2D image corresponding to the synthesis face model to obtain a synthesis face image after fusion. After fusion, the joint part between the teeth and the face portion is much gentle, and the overall effect is allowed to be more natural. In a conventional method, only expression transfer is carried out, and teeth and other oral details are not modified, which enables the visual effect of the image obtained after expression transfer to be very abrupt and strange.

SUMMARY

According to various aspects of the invention defined by the appended independent claims, a face model processing method and apparatus, and a non-volatile computer-readable storage medium are provided.

A face model processing method is provided, which is executed by an electronic device. The method includes:

    obtaining a three-dimensional face model corresponding to a user picture, and selecting a sample oral cavity model in an oral cavity model library for the three-dimensional face model;
    registering the sample oral cavity model into the three-dimensional face model by using an oral cavity position parameter in the three-dimensional face model;
    performing form adjustment on an oral cavity form of the registered sample oral cavity model by using an expression parameter of the three-dimensional face model to generate a target oral cavity model; and
    generating, based on the three-dimensional face model and the target oral cavity model, a three-dimensional face expression model corresponding to the user picture.

A face model processing apparatus is provided. The apparatus includes: a model obtaining unit, a model registration unit, a form adjustment unit and an expression model generating unit. The model obtaining unit is configured to obtain a three-dimensional face model corresponding to a user picture, and select a sample oral cavity model in an oral cavity model library for the three-dimensional face model. The model registration unit is configured to register the sample oral cavity model into the three-dimensional face model by using an oral cavity position parameter in the three-dimensional face model. The form adjustment unit is configured to perform form adjustment on an oral cavity form of the registered sample oral cavity model by using an expression parameter of the three-dimensional face model to generate a target oral cavity model. The expression model generating unit is configured to generate, based on the three-dimensional face model and the target oral cavity model, a three-dimensional face expression model corresponding to the user picture.

A non-volatile computer-readable storage medium is provided, which stores multiple instructions. The instructions are loaded and executed by a processor to perform steps of the foregoing method.

Details of one or more embodiments of the present disclosure are provided in the accompany drawings and description below. Other features and advantages of the present disclosure become more obvious from the specification, the accompanying drawings, and the claims.

## BRIEF DESCRIPTION OF THE DRAWINGS

To describe the technical solutions in the embodiments of the present disclosure or in the conventional art more clearly, the accompanying drawings required for describing the embodiments or the conventional art are described briefly hereinafter. Apparently, the accompanying drawings in the following description show merely some embodiments of the present disclosure, and a person of ordinary skill in the art may still derive other drawings from the accompanying drawings without creative efforts.

FIG. 1a is a diagram showing an application scenario of a face model processing method according to an embodiment of the present disclosure.

FIG. 1b is a schematic flowchart of a face model processing method according to an embodiment of the present disclosure.

FIG. 2 is a schematic diagram of an interface of a three-dimensional face model according to an embodiment of the present disclosure.

FIG. 3 is a schematic diagram of an interface of a sample oral cavity model according to an embodiment of the present disclosure.

FIG. 4 is a schematic diagram of displaying a model in a coordinate system according to an embodiment of the present disclosure.

FIG. 5 is a schematic diagram of an effect obtained after a sample oral cavity model is registered according to an embodiment of the present disclosure.

FIG. 6 is a schematic flowchart of a face model processing method according to an embodiment of the present disclosure.

FIG. 7 is a schematic diagram of an interface of a user picture according to an embodiment of the present disclosure.

FIG. 8 is a schematic diagram of an interface of a three-dimensional face model according to an embodiment of the present disclosure.

FIG. 9 is a schematic flowchart of a face model processing method according to an embodiment of the present disclosure.

FIG. 10 is a schematic diagram of an effect obtained after a sample oral cavity model is registered according to an embodiment of the present disclosure.

FIG. 11 is a schematic diagram of effects of oral cavity opening and closing degrees in different opening and closing parameter conditions according to an embodiment of the present disclosure.

FIG. 12 is a schematic flowchart of a face model processing method according to an embodiment of the present disclosure.

FIG. 13 is a schematic diagram of an interface of feature point selection positions according to an embodiment of the present disclosure.

FIG. 14 is a schematic diagram of an interface of an internal texture of an oral cavity model according to an embodiment of the present disclosure.

FIG. 15 is a schematic structural diagram of a face model processing apparatus according to an embodiment of the present disclosure.

FIG. 16 is a schematic structural diagram of a face model processing apparatus according to an embodiment of the present disclosure.

FIG. 17 is a schematic structural diagram of a model obtaining unit according to an embodiment of the present disclosure.

FIG. 18 is a schematic structural diagram of a model registration unit according to an embodiment of the present disclosure.

FIG. 19 is a schematic structural diagram of a form adjustment unit according to an embodiment of the present disclosure.

FIG. 20 is a schematic structural diagram of a brightness adjustment unit according to an embodiment of the present disclosure.

FIG. 21 is a schematic structural diagram of a server according to an embodiment of the present disclosure.

## DETAILED DESCRIPTION OF EMBODIMENTS

The technical solutions in the embodiments of the present disclosure are described clearly and completely with reference to the accompanying drawings in the embodiments of the present disclosure hereinafter. Apparently, the described embodiments are some of the embodiments of the present disclosure rather than all of the embodiments. Based on the embodiments of the present disclosure, all other embodiments obtained by a person skilled in the art without any creative efforts fall within the protection scope of the present disclosure.

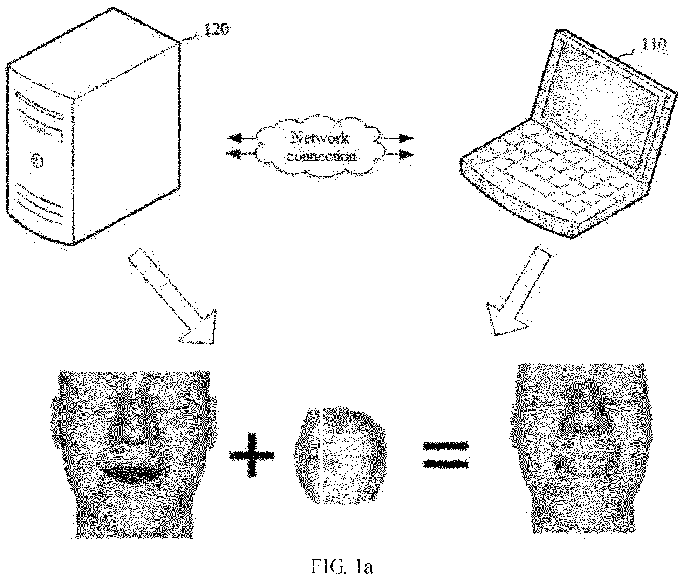

FIG. 1a is a diagram of an application environment of a face model processing method according to an embodiment. As shown in FIG. 1a, a user terminal 110 is connected to a server 120 over a network. The face model processing method may be implemented by the terminal 110, or may be implemented by the server 120, or may be collaboratively implemented by the terminal 110 and the server 120. The terminal 110 may include terminal devices having an image processing function and an interaction function, such as a tablet computer, a personal computer, a smartphone, a palmtop computer, and a mobile Internet device. The server 120 may be a server having an image processing function, and may be implemented by an independent server or a server cluster formed by multiple servers.

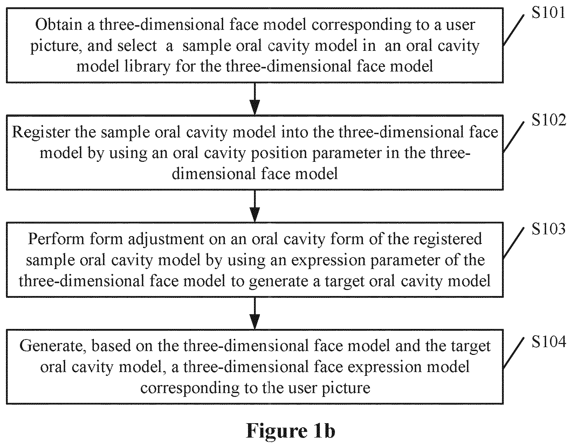

The face model processing method provided in the embodiments of the present disclosure is described in detail with reference to FIG. 1b to FIG. 14 hereinafter.

FIG. 1 is a schematic flowchart of a face model processing method according to an embodiment of the present disclosure. As shown in FIG. 1, the method in this embodiment of the present disclosure may include the following steps S101 to S104.

In S101, a three-dimensional face model corresponding to a user picture is obtained, and a sample oral cavity model in an oral cavity model library is selected for the three-dimensional face model.

It may be understood that, the user picture is a picture that is selected by a user for establishing a three-dimensional face model. The user picture may be a picture selected from a picture library, or may be a picture currently shot by a camera. The camera may be a fixed camera, or may be a rotatable camera. The user picture includes a face image. There may be one or more face images. Certainly, the user picture may be a face-like picture, such as a picture in a form of sketch, ink and wash painting, animation, architecture, sculpture, artwork, or the like.

The process of obtaining a three-dimensional face model corresponding to a user picture may be understood as follows. The electronic device obtains a selected user picture, performs face recognition on the user picture to obtain the face image in the user picture, obtains a three-dimensional expression model from an expression model library, and synthesizes the face image with the three-dimensional expression model to generate the three-dimensional face model corresponding to the user picture. The electronic device may be the user terminal 110 in FIG. 1, including terminal devices having an image processing function and an interaction function such as a tablet computer, a personal computer (PC). a smartphone, a palmtop computer, and a mobile internet device (MID). In this case, the user picture is read by the electronic device after the user selects the picture through the electronic device. Alternatively, the electronic device may be the server 120 having an image processing function in FIG. 1. In this case, the user picture is transmitted to the electronic device by the user terminal and is read by the electronic device, after the user inputs a request through the electronic device.

The face recognition processing may include performing face detection on the user picture. When the face image is detected, the electronic device may mark the detected face image, perform facial feature positioning or the like. The face detection may be performed according to actual scenario requirements. The face detection process may be implemented by using face recognition methods, such as a face recognition method based on feature face principal component analysis, a face recognition method of elastic graph matching, a face recognition method of a support vector machine, and a face recognition method of a deep neural network.

The process of obtaining a three-dimensional expression model from an expression model library may include: randomly selecting a three-dimensional expression model from an expression model set updated based on a current event (such as a current date, a hotspot event occurring on a current date, or a favorite theme selected by the user); or obtaining theme information of the user picture after analyzing the user picture, and searching the expression model library for a three-dimensional expression model matching the theme information. The theme information may be described by using a keyword. For example, the theme information may be "Girl's Day", "red packet", or "happy".

The process of obtaining a three-dimensional face model corresponding to a user picture may include: performing three-dimensional reconstruction processing on the face image in the user picture by using a three-dimensional reconstruction technology, and replacing an expression parameter of the face model generated through the three-dimensional reconstruction with an expression parameter selected by the user to generate the three-dimensional face model. The three-dimensional reconstruction technology means that under a condition that depth information of a target object is known, three-dimensional reconstruction of the target object can be implemented only through registration and fusion of point cloud data. Currently, the three-dimensional reconstruction technology is classified into a passive three-dimensional reconstruction technology and an active three-dimensional reconstruction technology based on an obtaining method for the depth information of the target object. In the passive three-dimensional reconstruction technology, an ambient environment such as reflection of natural light is utilized, the image is obtained by using a camera, and then three-dimensional spatial information of the target object is calculated by using a specific algorithm. The passive three-dimensional reconstruction technology mainly includes a texture restoration shape method, a shadow restoration shape method and a stereo vision method. In the active three-dimensional reconstruction technology, a light source or an energy source, such as a laser, a sound wave or an electromagnetic wave is transmitted to the target object, and the depth information of the target object is obtained by receiving a returned light wave. The active three-dimensional reconstruction technology mainly includes a Moire fringe method, a time-of-flight method, a structured light method and a triangulation method.

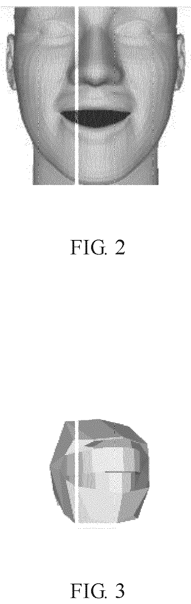

The obtained three-dimensional face model may be described by using a formula $S = \overline{S} + \Sigma w_i U_i + \Sigma v_i V_i$, where S represents a three-dimensional face model, $\overline{S}$ represents a three-dimensional model of an average face, $U_i$ and $V_i$ respectively represent a spatial basis vector matrix of a face identity and a spatial basis vector matrix of a face expression obtained by training a face three-dimensional model data set, and $w_i$ and $v_i$ represent an identity parameter and an expression parameter of a corresponding three-dimensional face model. $\overline{S}$, $U_i$, and $V_i$ are known numbers. If $w_i$ and $v_i$ are known, a corresponding three-dimensional face model S may be calculated according to the foregoing formula. Correspondingly, if the three-dimensional face model S is synthesized, $w_i$ and $v_i$ corresponding to the three-dimensional face model may also be obtained through detection. Generally, a presentation form of the three-dimensional face mode S is changed by changing values of $w_i$ and $v_i$. The identity parameter $w_i$ of the three-dimensional face model remains unchanged to control the change of $v_i$, so that geometric models with different expressions for the same face may be obtained. For example, FIG. 2 shows a generated three-dimensional expression model.

The oral cavity model library includes at least one oral cavity model, and each oral cavity model may be described by a formula $T = \overline{T} + \alpha \Delta T_1 + \beta \Delta T_2 + \gamma \Delta T_3$ $T = \overline{T} + \alpha \Delta T_1 + \beta \Delta T_2 + \gamma \Delta T_3$. For different oral cavity models, $\alpha$, $\beta$, and $\gamma$ have different values. $\overline{T}$ represents an oral cavity model in a closed state. $\Delta T_1$, $\Delta T_2$ and $\Delta T_3$ represent an oral cavity opening and closing offset, a tongue stretching offset, and a tongue swinging offset respectively; $\alpha$, $\beta$, and $\gamma$ represent an oral cavity opening and closing parameter, a tongue stretching parameter, and a tongue swinging parameter respectively. An oral cavity opening and closing form, a tongue stretching form, and a tongue swinging form may be controlled by changing the values of $\alpha$, $\beta$, and $\gamma$ respectively. An oral cavity model is randomly selected from the oral cavity model library to serve as a sample oral cavity model. The sample oral cavity model is shown in FIG. 3.

In step S102, the sample oral cavity model is registered into the three-dimensional face model by using an oral cavity position parameter in the three-dimensional face model.

It may be understood that, the oral cavity position parameter indicates registering the sample oral cavity model into the three-dimensional face model. The registration includes registration of a size and a position of the sample oral cavity model, so that the sample oral cavity model matches the three-dimensional face model.

In an implementation, the electronic device obtains an angle rotation parameter and a position translation parameter of the sample oral cavity model relative to the three-dimensional face model, and obtains current coordinate information of the sample oral cavity model; obtains target coordinate information of the sample oral cavity model in the three-dimensional face model based on the angle rotation parameter, the position translation parameter, the current coordinate information, coordinate information of the three-dimensional face model, and coordinate information of an average face model; and moves the sample oral cavity model to a target position indicated by the target coordinate information. The angle rotation parameter refers to a rotation angle and a rotation direction of the sample oral cavity model relative to the three-dimensional face model in a space (a three-dimensional coordinate system). The rotation direction includes a pitching direction, a horizontal deflection direction, and a spatial rolling direction. The angle rotation parameter may be represented by a rotation matrix. The position translation parameter refers to a relative distance between the sample oral cavity model and the three-dimensional face model on a plane (such as projected onto an xoy plane), and may be calculated based on coordinates of the sample oral cavity model and the three-dimensional face model. The average face model is obtained as follows. Facial features are extracted from a certain quantity of common faces, average values are calculated according to measured data, and the average face model is obtained through synthesis according to the average values.

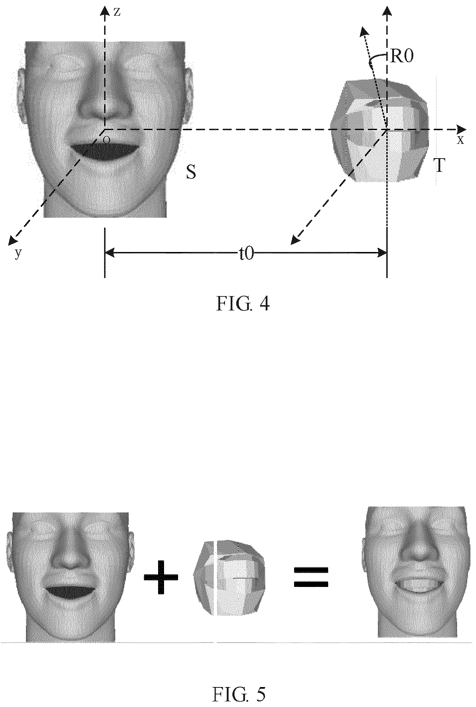

The process of obtaining an angle rotation parameter and a position translation parameter of the sample oral cavity model relative to the three-dimensional face model may include: obtaining a rotation matrix R1 and a coordinate t1 of the sample oral cavity model in the same coordinate system, and obtaining a rotation matrix R2 and a coordinate t2 of the three-dimensional face model. In this case, the angle rotation parameter R of the sample oral cavity model relative to the three-dimensional face model may be calculated based on R1 and R2, and the position translation parameter t may be calculated based on t1 and t2. Certainly, one of the sample oral cavity model and the three-dimensional face model in the same coordinate system may function as a reference model and the angle rotation parameter R and the position translation parameter t of another model relative to the reference model are required to be calculated. For example, as shown in FIG. 4, a three-dimensional face model S and a sample oral cavity model T are included. In the same coordinate system xyz, if S functions as a reference model, a rotation matrix of S relative to the coordinate system is R1, and a rotation matrix of T relative to the coordinate system is R2. In this case, an angle rotation parameter R = R1/R2. Correspondingly, a position translation parameter of T relative to S is t = t0. It may be understood that, the three-dimensional expression model stored in the expression model library and the oral cavity model stored in the oral cavity model library are frontally disposed (without angle deflection), and the generated three-dimensional face model correspondingly rotates based on rotation of the face image in the user picture. In this case, the user picture is analyzed to obtain a rotation matrix of the face image. The rotation matrix is an angle rotation parameter R of the sample oral cavity model relative to the three-dimensional face model. The position translation parameter t of the sample oral cavity model relative to the three-dimensional face model may be calculated based on a position difference, or may be obtained by calculating a coordinate difference on the plane based on the coordinate information of the three-dimensional face model and the coordinate information of the sample oral cavity model.

In addition, because the size of the obtained sample oral cavity model does not necessarily match a size of the three-dimensional face model completely, the size of the sample oral cavity model is to be adjusted according to the size of the three-dimensional face model (for example, the size of the sample oral cavity model is adjusted according to a projection area of the three-dimensional face model on the xoy plane). The adjustment includes: obtaining an identity feature parameter $w_1$ of the face image in the user picture by analyzing the user picture, and obtaining the coordinate information of the three-dimensional face model $S = \overline{S} + \Sigma w_i U_i$ based on the identity feature parameter $w_i$, an identity feature base $U_i$, and the coordinate information of the average face model $\overline{S}$; calculating a first area $Area(\pi(S))$ of a projection of the coordinate information $\overline{S}$ of the three-dimensional face model on a plane (for example, the xoy plane) and a second area $Area(\pi(\overline{S}))$ a projection **Area( $\pi (\overline{S})$)** of the coordinate information $\overline{S}$ of the average face model projected on the plane, and calculating a first ratio $\dfrac{Area(\pi(S))}{Area(\pi(\overline{S}))} \dfrac{Area(\pi(S))}{Area(\pi(\overline{S}))}$ of the first area to the second area; and adjusting the size of the sample oral cavity model based on the first ratio, so that it can be ensured that the size of the oral cavity model changes with the size of the three-dimensional face model.

During specific implementation. the obtained angle rotation parameter R, the current coordinate information T of the sample oral cavity model, the position translation parameter t, and the first ratio are substituted into a formula

$$T^* = \frac{Area(\pi(S))}{Area(\pi(\overline{S}))} \cdot R \cdot T + t \qquad T^* = \frac{Area(\pi(S))}{Area(\pi(\overline{S}))} \cdot R \cdot T + t$$

$$T^* = \frac{Area(\pi(S))}{Area(\pi(\overline{S}))} \cdot R \cdot T + t$$

, to obtain coordinate information T* of the sample oral cavity model subjected to the adjustment of the size and the position. The transformation process from T to T* implements the fusion of the sample oral cavity model and the three-dimensional face model. FIG. 5 shows an effect obtained after the fusion of S and T. It should be noted that the described coordinate information is the three-dimensional coordinate information.

In S103, form adjustment is performed on an oral cavity form of the registered sample oral cavity model by using the expression parameter of the three-dimensional face model to generate a target oral cavity model.

It may be understood that, the three-dimensional face model and the sample oral cavity model have respective action mechanisms when the expression changes, and are independent from each other. Therefore, it is difficult to ensure that the oral cavity form of the sample oral cavity model matches the form of the three-dimensional face model. To ensure coordination between the sample oral cavity model and the three-dimensional face model, the oral cavity form of the sample oral cavity model is required to be adjusted.

The oral cavity form includes an oral cavity opening and closing form, a tongue stretching form, and a tongue swinging form, which are controlled by values of an oral cavity opening and closing parameter $\alpha$, a tongue stretching parameter $\beta$, and a tongue swinging parameter $\gamma$ respectively.

The oral cavity opening and closing parameter $\alpha$ is obtained based on an expression parameter v and a linkage weight $\eta$ of the three-dimensional face model. Specifically, multiple expression component parameters $v_i$ corresponding to the expression parameter v are obtained, products of the expression component parameters $v_i$ among the multiple expression component parameters and corresponding linkage weights $\eta_i$ are calculated, and linear weighting processing is performed on the products to obtain an opening and closing parameter $\alpha = \Sigma i_{\in G}\eta i \cdot v_i$ $\alpha = \sum_{i \in G}\eta_i \cdot v_i$ of the oral cavity model. In which, G is a set of indexes i of the expression parameter $v_i$ related to oral cavity opening and closing actions in a formula $S = \overline{S} + \sum w_i U_i + \sum v_i V_i$ $S = \overline{S} + \sum w_i U_i + \Sigma v_i V_i$. A value of $\eta_i$ is set by manually adjusting the oral cavity model and the three-dimensional face model, a parameter sample pair $< \alpha,v >$ is obtained when actions of the oral cavity model and the three-dimensional face model are coordinated, and then a statistical value of is calculated by using a least square method to serve as an optimal prior parameter $\eta_i$. The number of parameter sample pairs is preferably greater than or equal to twice a value of G, so as to improve accuracy of calculation of $\eta_i$. The least square method (also referred to as method of the least squares) is a mathematical optimization technology. According to the least square method, a best data function matching is searched for by minimizing a sum of squares of errors. With the least square method, unknown data can be easily calculated, so that the sum of squares of errors between the obtained data and actual data is minimized.

The tongue stretching parameter $\beta$ and the tongue swinging parameter $\gamma$ may be obtained based on the expression parameter in an oral cavity expression parameter set. That is, the expression parameter $v_i$ corresponds to the tongue stretching parameter $\beta$ and the tongue swinging parameter $\gamma$. When the expression parameter is stored in a table, $\beta$ and $\gamma$ may be directly obtained by looking up the table. Alternatively, the tongue stretching parameter and the tongue swinging parameter may be randomly selected from a tongue stretching parameter set and a tongue swinging parameter set updated based on the current event. Alternatively, a predefined oral cavity expression parameter set may be searched based on the theme information of the user picture for $\beta$ and $\gamma$ matching the theme information. The theme information may be described by a keyword. For example, the theme information may be "sad", "laugh", "happy", or the like.

During specific implementation. the electronic device adjusts the oral cavity opening and closing parameter $\alpha$, the tongue stretching parameter $\beta$, and the tongue swinging parameter $\gamma$ of the sample oral cavity model to generate an adjusted sample oral cavity model, namely, the target oral cavity model.

In an embodiment, in a case that a face skin color brightness value does not match an oral cavity brightness value, the electronic device performs brightness adjustment on an oral cavity brightness value of the sample oral cavity model subjected to the form adjustment by using the face skin color brightness value of the user picture or controlling an illumination direction. Specifically, a scaling factor $s_{tooth\_light}$ of the oral cavity brightness value is calculated based on the face skin color brightness value, and the oral cavity brightness value is scaled accordingly using the scaling factor $s_{tooth\_light}$ after an oral cavity texture RGB (red, green, blue) space is converted to an HSL (hue, saturation, lightness) space, and finally, the oral cavity brightness value is converted into the RGB space for display.

In S104, based on the three-dimensional face model and the target oral cavity model, a three-dimensional face expression model corresponding to the user picture is generated.

It may be understood that, the generated three-dimensional face expression model is a result of fusing the three-dimensional face model and the target oral cavity model. That is, for the target oral cavity model and the three-dimensional face model, both sizes and positions are matched, form expressions are consistent, and brightness is coordinated. In addition, the adjusted three-dimensional face model and the target oral cavity model are rendered to generate the three-dimensional face expression model.

In the embodiment of the present disclosure, the three-dimensional face model corresponding to the user picture is obtained, and the sample oral cavity model in the oral cavity model library is selected for the three-dimensional face model. Then, the sample oral cavity model is registered into the three-dimensional face model by using the oral cavity position parameter in the three-dimensional face model, and form adjustment is performed on the oral cavity form of the registered sample oral cavity model by using the expression parameter of the three-dimensional face model to generate the target oral cavity model. The three-dimensional face expression model corresponding to the user picture is obtained based on the obtained three-dimensional face model and the generated target oral cavity model. According to the oral cavity position parameter and the expression parameter of the three-dimensional face model, the position and the size of the sample oral cavity model are configured and the oral cavity shape is adjusted, so that the sample oral cavity model can keep consistent with the three-dimensional face model, thereby solving the problem of synthesis distortion of the sample oral cavity model and the three-dimensional face model, and obtaining a good synthesis effect of the generated three-dimensional face expression model.

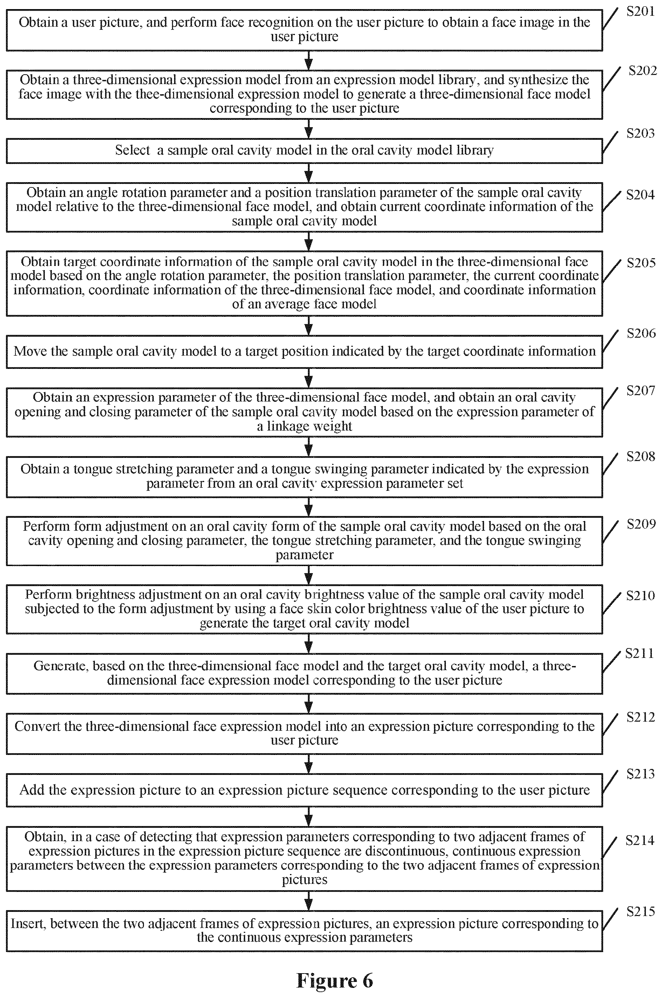

FIG. 6 is a schematic flowchart of a face model processing method according to an embodiment of the present disclosure. As shown in FIG. 6, the method in this embodiment of the present disclosure may include the following step S201 to step S215.

In S201, a user picture is obtained, and face recognition is performed on the user picture to obtain a face image in the user picture.

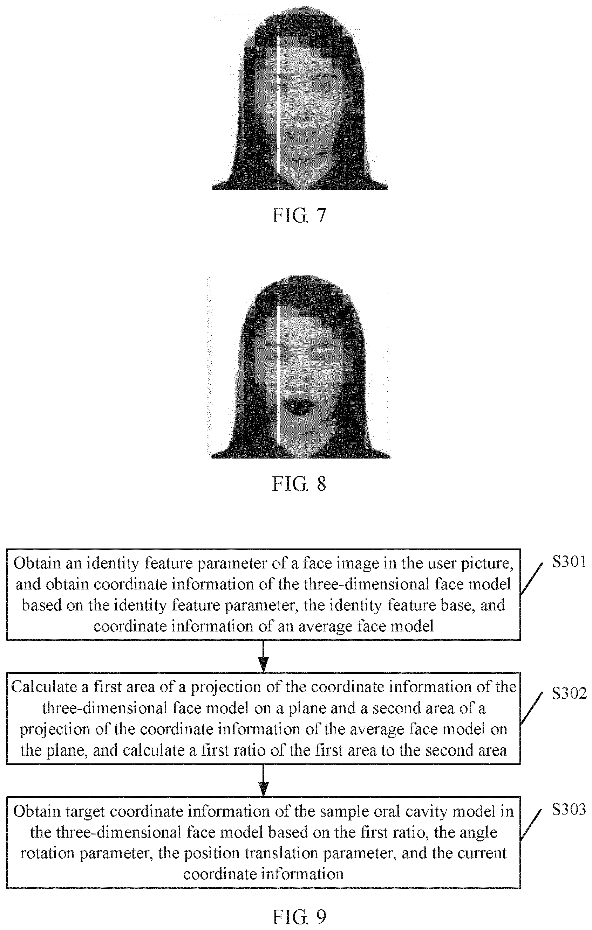

For description of the user picture, one may be refer to the explanation of the user picture in S101 of the foregoing embodiment. For example, as shown in FIG. 7, the obtained user picture includes a face image.

During specific implementation, an electronic device obtains the user picture, and performs the face recognition on the user picture to recognize the face image included in the user picture. The face recognition may include performing face detection on the user picture. When the face image is detected, the electronic device may mark the detected face image, perform facial feature positioning or the like. The face detection may be performed according to actual scenario requirements. The face detection process may be implemented by using face recognition methods, such as a face recognition method based on feature face principal component analysis, a face recognition method of elastic graph matching, a face recognition method of a support vector machine, and a face recognition method of a deep neural network.

For description of the electronic device, one may refer to the explanation of the electronic device in S101 of the foregoing embodiment.

In S202, a three-dimensional expression model is obtained from an expression model library, and the face image is synthesized with the three-dimensional expression model to generate a three-dimensional face model corresponding to the user picture.

It may be understood that, the expression model library includes at least one expression model. The expression model is a facial feature model with expressions. The process of obtaining a three-dimensional expression model from an expression model library may be performed as follows. A three-dimensional expression model is randomly selected from an expression model set updated based on a current event. For example, ten expression models are updated based on a hotspot event occurring on a current date, and the electronic device may randomly select one expression model from the ten expression models to synthesize the three-dimensional face model. Alternatively, the user picture is analyzed to obtain theme information of the user picture or theme information carried in a request is extracted, and the expression model library is searched for a three-dimensional expression model matching the theme information.

The obtained three-dimensional face model may be described by using a formula $S = \overline{S} + \sum w_i\, U_i + \sum v_i\, V_i$. For description of the three-dimensional face model and parameters thereof, one may refer to S101 in the foregoing embodiment.

The process of obtaining a three-dimensional face model corresponding to the user picture may include: obtaining a three-dimensional expression model from an expression model library, and synthesizing the face image with the three-dimensional expression model to generate the three-dimensional face model corresponding to the user picture. For example, FIG. 8 shows a three-dimensional expression model synthesized based on the user picture shown in FIG. 7.

During specific implementation, the three-dimensional expression model is obtained from the expression model library based on the theme information of the user picture or based on the current event. The electronic device synthesizes the recognized face image in the user picture with the obtained three-dimensional expression model to generate the three-dimensional face model corresponding to the user picture.

In S203, a sample oral cavity model in the oral cavity model library is selected.

It may be understood that, the oral cavity model library includes at least one oral cavity model, and each oral cavity model may be described by using a formula $T = \overline{T} + \alpha\Delta T_1 + \beta\Delta T_2 + \gamma\,\Delta T_3$. For detailed description, one may refer to the explanation of S101 in the foregoing embodiment.

In S204, an angle rotation parameter and a position translation parameter of the sample oral cavity model relative to the three-dimensional face model are obtained, and current coordinate information of the sample oral cavity model is obtained.

It may be understood that, for description of the angle rotation parameter and the position translation parameter, one may refer to the explanation of S102 in the foregoing embodiment. For the manner of obtaining the angle rotation parameter and the position translation parameter of the sample oral cavity model relative to the three-dimensional face model in S204, one may refer to the obtaining manner of S102 in the foregoing embodiments.

The current coordinate information of the sample oral cavity model is a three-dimensional coordinate value of feature points of the sample oral cavity model in a current coordinate system. Current coordinate information of a prestored sample oral cavity model may be directly obtained from the oral cavity model library.

In S205, target coordinate information of the sample oral cavity model in the three-dimensional face model is obtained based on the angle rotation parameter, the position translation parameter, the current coordinate information, coordinate information of the three-dimensional face model, and coordinate information of an average face model.

All the coordinate information (such as the coordinate information of the three-dimensional face model, the coordinate information of the average face model, the current coordinate information, and the target coordinate information) is a three-dimensional space coordinate, and is in a one-to-one correspondence with feature points of the model. That is, the coordinate information of each model is a three-dimensional coordinate set of the feature points of the model.

In an implementation, as shown in FIG. 9, the process of obtaining target coordinate information of the sample oral cavity model in the three-dimensional face model based on the angle rotation parameter, the position translation parameter, the current coordinate information, coordinate information of the three-dimensional face model, and coordinate information of an average face model may include the following steps S301 to S303.

In S301, an identity feature parameter of the face image in the user picture is obtained, and the coordinate information of the three-dimensional face model is obtained based on the identity feature parameter, the identity feature base, and the coordinate information of the average face model.

It may be understood that the identity feature parameter $w_i$ of the face image in the user picture may be obtained by analyzing the user picture. In addition, the identity parameter keeps unchanged in a case that the expression parameter is 0 in the three-dimensional face model $S = \overline{S} + \sum w_i U_i + \sum v_i V_i$ $S = \overline{S} + \sum w_i U_i + \sum v_i V_i$, Therefore, the obtained identity feature parameter $w_i$, the identity feature base $U_i$, and the coordinate information $S$ of the average face model may be substituted into a formula $S = \overline{S} + \sum w_i U_i$ to obtain the coordinate information $\overline{S}$ of the three-dimensional face model.

In S302, a first area of a projection of the coordinate information of the three-dimensional face model on a plane and a second area of a projection of the coordinate information of the average face model on the plane are calculated, and a first ratio of the first area to the second area is calculated.

It may be understood that, because the size of the obtained sample oral cavity model does not necessarily match a size of the three-dimensional face model completely, the size of the sample oral cavity model is adjusted according to the size of the three-dimensional face model. For a calculating method of the first ratio, one may refer to the calculating manner of S 102 in the foregoing embodiment.

In S303, the target coordinate information of the sample oral cavity model in the three-dimensional face model is obtained based on the first ratio, the angle rotation parameter, the position translation parameter, and the current coordinate information.

During specific implementation, the electronic device substitutes the obtained angle rotation parameter R, the current coordinate information T of the sample oral cavity model, the position translation parameter t, and the first ratio

$$\frac{\text{Area}(\pi(S))}{\text{Area}(\pi(\overline{S}))} \quad \frac{\text{Area}(\pi(S))}{\text{Area}(\pi(\overline{S}))}$$ into a formula $$T^* = \frac{\text{Area}(\pi(S))}{\text{Area}(\pi(\overline{S}))} \cdot R \cdot T + t$$ t , to obtain the coordinate

information $T^*$ of the sample oral cavity model subjected to the adjustment of the size and the position. $T^*$ is the target coordinate information of the sample oral cavity model in the three-dimensional face model.

In S206, the sample oral cavity model is moved to a target position indicated by the target coordinate information.

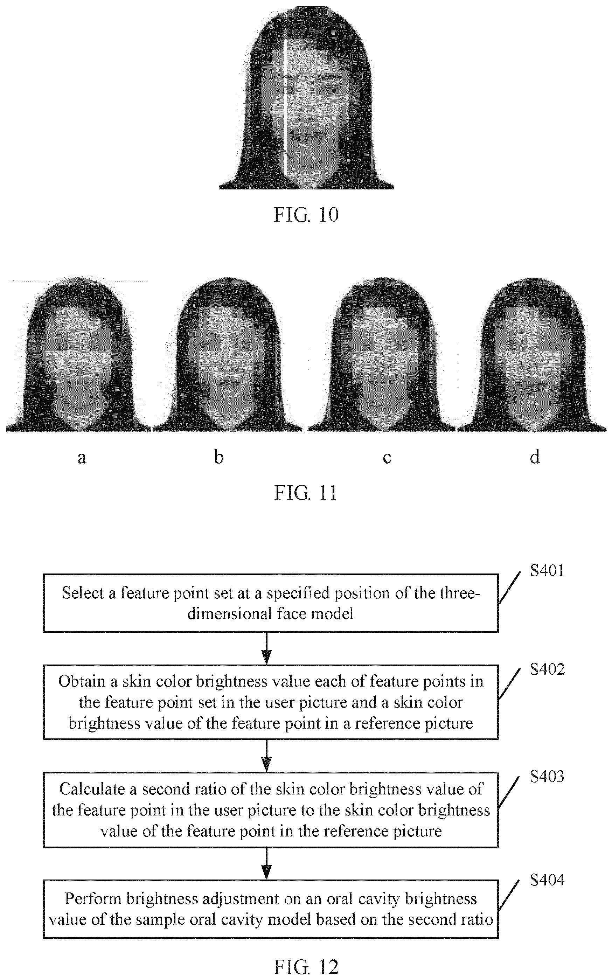

The transformation process from T to $T^*$ implements the fusion of the sample oral cavity model and the three-dimensional face model. For example, FIG. 10 is a diagram of an effect obtained after the sample oral cavity model is registered to the three-dimensional face model shown in FIG. 8.

In S207, the expression parameter of the three-dimensional face model is obtained, and an oral cavity opening and closing parameter of the sample oral cavity model is obtained based on the expression parameter and a linkage weight.

For description of the oral cavity opening and closing parameter and the linkage weight, one may refer to S103 in the foregoing embodiment.

For example, a to d in FIG. 11 respectively describe an opening and closing degree of the registered sample oral cavity model with different $\alpha$ values.

In S208, a tongue stretching parameter and a tongue swinging parameter indicated by the expression parameter are obtained from an oral cavity expression parameter set.

The tongue stretching parameter $\beta$ is used for controlling a stretching degree of a tongue, and the tongue swinging parameter $\gamma$ is used for controlling a left-right swinging degree of the tongue. For an obtaining manner of the tongue stretching parameter $\beta$ and the tongue swinging parameter $\gamma$, one may refer to S103 in the foregoing embodiment.

In S209, form adjustment is performed on the oral cavity form of the sample oral cavity model based on the oral cavity opening and closing parameter, the tongue stretching parameter, and the tongue swinging parameter.

It may be understood that, the three-dimensional face model and the sample oral cavity model have respective action mechanisms when the expression changes, and are independent from each other. Therefore, it is difficult to ensure that the oral cavity form of the sample oral cavity model matches the form of the three-dimensional face model. To ensure coordination between the sample oral cavity model and the three-dimensional face model, the oral cavity form of the sample oral cavity model is to be adjusted. That is, the oral cavity form of the sample oral cavity model registered into the three-dimensional face model is adjusted.

If the registered sample oral cavity model is $T^* = \overline{T} + \alpha 1 \Delta T_1 + \beta 1 \Delta T_2 + \gamma 1 \Delta T_a$ $T^* = \overline{T} + \alpha 1 \Delta T_1 + \beta 1 \Delta T_2 + \gamma 1 \Delta T_3$, the oral cavity opening and closing parameter $\alpha 2$ obtained in S207 and the tongue stretching parameter $\beta 2$ and the tongue swinging parameter $\gamma 2$ obtained in S208 replace $\alpha 1$, $\beta 1$, and $\gamma 1$, so as to adjust the oral cavity form of the sample oral cavity model.

In S210, brightness adjustment is performed on an oral cavity brightness value of the sample oral cavity model subjected to the form adjustment by using a face skin color brightness value of the user picture to generate the target oral cavity model.

It may be understood that, the brightness values of the exposed oral cavity model in different environments are different. For example, in a case that the light is relatively dark, a facial skin color of the face model is usually dark. If the brightness of the oral cavity model is not adjusted but rendering is directly performed, the displayed oral cavity model is bright and uncoordinated. Therefore, in a case that the face skin color brightness value does not match the oral cavity brightness value (for example, a difference between the face skin color brightness value and the oral cavity brightness value goes beyond a specified threshold range), brightness adjustment is performed on the oral cavity brightness value of the sample oral cavity model subjected to the form adjustment by using the face skin color brightness value of the user picture.

In an implementation, as shown in FIG. 12, the process of performing brightness adjustment on an oral cavity brightness value of the sample oral cavity model subjected to the form adjustment by using a face skin color brightness value of the user picture may include the following steps S401 to S404.

In S401, a feature point set is selected at a specified portion of the three-dimensional face model.

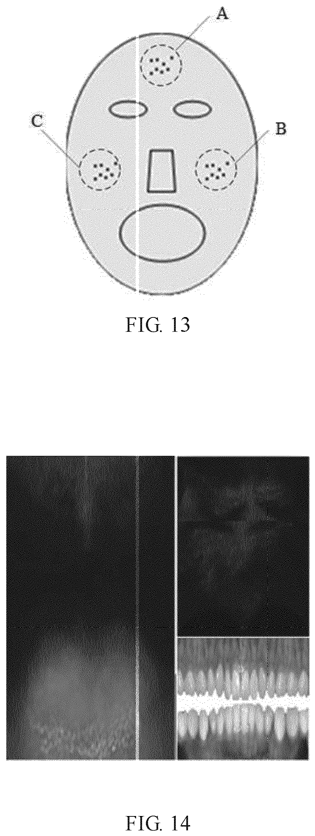

It may be understood that, the specified portion may be a forehead and a cheek of the three-dimensional face model. At least one feature point is randomly selected at the specified portion. The at least one feature point may include a vertex. FIG. 13 shows a face image of the three-dimensional face model, where A, B and C form the selected feature point set.

In S402, a skin color brightness value of each of feature points in the feature point set in the user picture and a skin color lightness value of the feature point in a reference picture are obtained.

For example, if a set A includes ten feature points A1 to A10, a set B includes ten feature points B1 to B10, and a set C includes ten feature points C1 to C10, skin color (skin color texture) brightness values $l_p^*$ of 30 feature points at corresponding positions of the user picture are obtained, and linear weighting is performed on the obtained skin color brightness value to obtain $\sum_{p \in H} l_p^* \cdot l_p^*$ represents lightness value of the skin color texture at a position p of the user picture, and H includes A, B and C. Similarly, the skin color (skin color texture) brightness values $l_p$ of the 30 feature points at the corresponding position in the reference picture (any user picture including a face image in a normal brightness condition) selected by a user are obtained, and the linear weighting is performed on the obtained skin color brightness values to obtain $\sum_{p \in H} l_p^{\sum p \in H l_p}$. $l_p$ is texture brightness at a position p of the reference picture, and H includes A, B and C.

In S403, a second ratio of the skin color brightness value of each of the feature points in the user picture to the skin color brightness value of the feature point in the reference picture is calculated.

The second ratio $S_{tooth\_light} = \dfrac{\sum_{p \in H} l_p^*}{\sum_{p \in H} l_p}$ $S_{tooth\_light} = \dfrac{\sum_{p \in H} l_p^*}{\sum_{p \in H} l_p}$ is calculated based on the skin color brightness value obtained in S402.

The electronic device determines the brightness of the oral cavity texture (as shown in FIG. 5) by calculating the ratio of brightness of a new face to the brightness of the reference face.

In S404, lightness adjustment is performed on the oral cavity brightness value of the sample oral cavity model based on the second ratio.

After the oral cavity texture of the sample oral cavity model is converted from an RGB space to an HSL space, the electronic device scales the oral cavity brightness value of the oral cavity texture at an equal proportion by using the second ratio $s_{tooth\_light}$. Fi nally, the electronic device converts the oral cavity brightness value into the RGB space for display. An oral cavity texture image (each portion of the oral cavity) is shown in FIG. 14. The brightness value of the feature points of the oral cavity texture image in FIG. 14 is adjusted based on the calculated $s_{tooth\_light}$.

In S211, based on the three-dimensional face model and the target oral cavity model, a three-dimensional face expression model corresponding to the user picture is generated.

It may be understood that, the generated three-dimensional face expression model is a result of fusing the three-dimensional face model and the target oral cavity model. That is, for the target oral cavity model and the three-dimensional face model, both sizes and positions are matched, form expressions are consistent, and brightness is coordinated. In addition, the adjusted three-dimensional face model and the target oral cavity model are rendered to generate the three-dimensional face expression model.

In a specific implementation scenario, the following steps are included in the embodiment of the present disclosure.

In S212, the three-dimensional face expression model is converted into an expression picture corresponding to the user picture.

It may be understood that, the three-dimensional face expression model is a three-dimensional image, and the expression picture is a two-dimensional image. The conversion from three-dimensional face expression model to the expression picture is only conversion of a space dimension, and picture content is unchanged.

In S213, the expression picture is added to an expression picture sequence corresponding to the user picture.

It may be understood that, the expression picture sequence may be formed by multiple frames of expression pictures. The expression picture sequence is displayed as dynamic expression pictures (for example, pictures of GIF format) displayed according to a specified display order and time interval. The process of adding the expression picture to an expression picture sequence corresponding to the user picture may include: creating an empty expression picture sequence, and then adding the obtained multiple frames of expression pictures to the empty expression picture sequence. It may further be understood that, an empty expression picture sequence is created in response to a set time interval. Once a frame of expression picture is generated, the frame of expression picture is added to the empty expression picture sequence.

In S214, in a case that it is detected that expression parameters of two adjacent frames of expression pictures in the expression picture sequence are discontinuous, continuous expression parameters between the expression parameters of the two adjacent frames of expression pictures are obtained.

It may be understood that, each frame of expression picture in the expression picture sequence corresponds to one expression parameter, and the expression parameters of the two adjacent frames of expression pictures are continuous, so that when the expression picture sequence is displayed, the user may watch the expression picture sequence with a set of expressions changing continuously, thereby increasing the interesting. The face images corresponding to each frame of expression picture may be completely the same, may be completely different, or may be partially the same, which is not limited herein.

During specific implementation, the electronic device traverses all frames of expression pictures, and reads a first expression parameter of the traversed current expression picture and a second expression parameter of a next frame of expression picture. If the first expression parameter and the second expression parameter are continuous, the electronic device continuously reads a third expression parameter of a next frame of expression picture, and determines whether the second expression parameter and the third expression parameter are continuous. If the first expression parameter and the second expression parameter are discontinuous, the electronic device obtains continuous expression parameters between the first expression parameter and the second expression parameter, and searches the picture library for an expression picture corresponding to the continuous expression parameters or generates an expression picture corresponding to the continuous expression parameters by using the foregoing manner. There is at least one continuous expression parameter. That is, at least one frame of expression picture is inserted between two frames of discontinuous expression pictures, so that the discontinuous expression pictures become continuous expression pictures.

In S215, an expression picture corresponding to the continuous expression parameters is inserted between the two adjacent frames of expression pictures.

The electronic device inserts the expression picture corresponding to the obtained continuous expression parameters between the two frames of discontinuous expression pictures, so that expressions continuously change.

Usually, a large number of expression pictures are required to be obtained to generate the expression picture sequence with the expressions changing continuously. In order to reduce a calculation amount, a predetermined number of frames of expression pictures are first obtained, and supplementing is performed by inserting the frames (inserting the expression pictures).

In this embodiment of the present disclosure, the three-dimensional face model corresponding to the user picture is obtained, and the sample oral cavity model in the oral cavity model library is selected. Then, the sample oral cavity model is registered into the three-dimensional face model by using the oral cavity position parameter in the three-dimensional face model, and form adjustment is performed on the oral cavity form of the registered sample oral cavity model by using the expression parameter of the three-dimensional face model to generate the target oral cavity model. The three-dimensional face expression model corresponding to the user picture is obtained based on the obtained three-dimensional face model and the generated target oral cavity model. According to the oral cavity position parameter and the expression parameter of the three-dimensional face model, the position and the size of the sample oral cavity model are configured and the oral cavity form is adjusted, so that the sample oral cavity model can keep consistent with the three-dimensional face model, thereby solving the problem of synthesis distortion of the sample oral cavity model and the three-dimensional face model, and thus obtaining the good synthesis effect of the generated three-dimensional face expression model.

It may be understood that, although the steps in the flowcharts of FIG. 1b, FIG. 6, FIG. 9 and FIG. 12 are sequentially shown according to indication of arrows, the steps are not necessarily performed sequentially according to the sequence indicated by the arrows. Unless clearly specified in this specification, execution of the steps is not strictly limited, and the steps may be performed in other sequences. Moreover, at least some of the steps in FIG. 1b, FIG. 6, FIG. 9 and FIG. 12 may include multiple substeps or multiple stages. The substeps or the stages are not necessarily performed at the same time instant, but may be performed at different time instants. The substeps or the stages are not necessarily executed sequentially, but may be performed at least partially in turn or alternately with other steps or at least some of the substeps or stages of other steps.

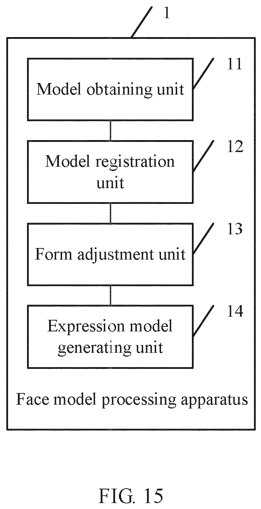

The face model processing apparatus according to embodiments of the present disclosure is described in detail with reference to FIG. 15 to FIG. 20. The apparatus shown in FIG. 15 to FIG. 20 is configured to perform the methods in the embodiments shown in FIG. 1 to FIG. 14 of the present disclosure. For ease of description, only a part related to the embodiments of the present disclosure is shown. For specific technical details that are not disclosed, one may refer to the embodiments shown in FIG. 1 to FIG. 14 of the present disclosure.

FIG. 15 is a schematic structural diagram of a face model processing apparatus according to an embodiment of the present disclosure. As shown in FIG. 15, the face model processing apparatus 1 in this embodiment of the present disclosure may include: a model obtaining unit 11, a model registration unit 12, a form adjustment unit 13, and an expression model generating unit 14.

The model obtaining unit 11 is configured to obtain a three-dimensional face model corresponding to a user picture, and select a sample oral cavity model in an oral cavity model library for the three-dimensional face model.

The model registration unit 12 is configured to register the sample oral cavity model into the three-dimensional face model by using an oral cavity position parameter in the three-dimensional face model.

In an implementation, the model registration unit 12 is configured to: obtain an angle rotation parameter and a position translation parameter of the sample oral cavity model relative to the three-dimensional face model, and obtain current coordinate information of the sample oral cavity model; obtain target coordinate information of the sample oral cavity model in the three-dimensional face model based on the angle rotation parameter, the position translation parameter, the current coordinate information, coordinate information of the three-dimensional face model, and coordinate information of an average face model; and move the sample oral cavity model to a target position indicated by the target coordinate information.

The form adjustment unit 13 is configured to perform form adjustment on an oral cavity form of the registered sample oral cavity model by using an expression parameter of the three-dimensional face model to generate a target oral cavity model.

The expression model generating unit 14 is configured to generate, based on the three-dimensional face model and the target oral cavity model, a three-dimensional face expression model corresponding to the user picture.

For description of terms and manners such as the user picture, the oral cavity position parameter, the angle rotation parameter, the three-dimensional face model, the sample oral cavity model, and the adjustment manner of oral cavity brightness, one may refer to the content in the foregoing embodiments of the face model processing method.

In the embodiment of the present disclosure, the three-dimensional face model corresponding to the user picture is obtained, and the sample oral cavity model in the oral cavity model library is selected for the three-dimensional face model. Then, the sample oral cavity model is registered into the three-dimensional face model by using the oral cavity position parameter in the three-dimensional face model, and form adjustment is performed on the oral cavity form of the registered sample oral cavity model by using the expression parameter of the three-dimensional face model to generate the target oral cavity model. The three-dimensional face expression model corresponding to the user picture is obtained based on the obtained three-dimensional face model and the generated target oral cavity model. According to the oral cavity position parameter and the expression parameter of the three-dimensional face model, the position and the size of the sample oral cavity model are configured and the oral cavity form is adjusted, so that the sample oral cavity model can keep consistent with the three-dimensional face model, thereby solving the problem of synthesis distortion of the sample oral cavity model and the three-dimensional face model, and thus obtaining the good synthesis effect of the generated three-dimensional face expression model.

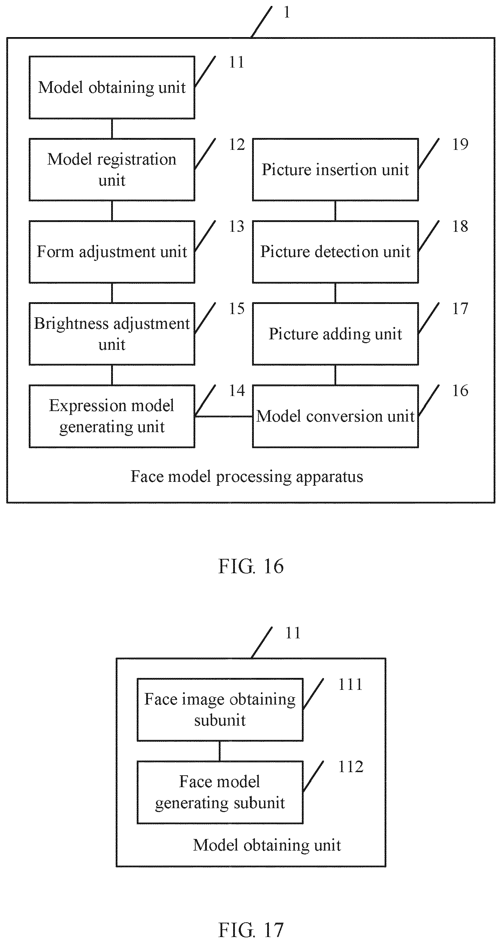

FIG. 16 is a schematic structural diagram of a face model processing apparatus according to an embodiment of the present disclosure. As shown in FIG. 16, the face model processing apparatus 1 in this embodiment of the present disclosure may include: a model obtaining unit 11, a model registration unit 12, a form adjustment unit 13, an expression model generating unit 14, a brightness adjustment unit 15, a model conversion unit 16, a picture adding unit 17, a picture detection unit 18, and a picture insertion unit 19.

The model obtaining unit 11 is configured to obtain a three-dimensional face model corresponding to a user picture, and select a sample oral cavity model in an oral cavity model library for the three-dimensional face model.

In an embodiment, as shown in FIG. 17, the model obtaining unit 11 includes: a face image obtaining subunit 111 and a face model generating subunit 112.

The face image obtaining subunit 111 is configured to obtain a selected user picture, and perform face recognition on the user picture to obtain a face image in the user picture.

The face model generating subunit 112 is configured to obtain a three-dimensional expression model from an expression model library, and synthesize the face image with the three-dimensional expression model to generate the three-dimensional face model corresponding to the user picture.

During specific implementation. the face model generating subunit 112 is configured to: obtain a three-dimensional expression model from an expression model library based on theme information of the user picture or based on a current event, and synthesize the recognized face image in the user picture with the obtained three-dimensional expression model to generate the three-dimensional face model corresponding to the user picture.

The model registration unit 12 is configured to register the sample oral cavity model into the three-dimensional face model by using an oral cavity position parameter in the three-dimensional face model.

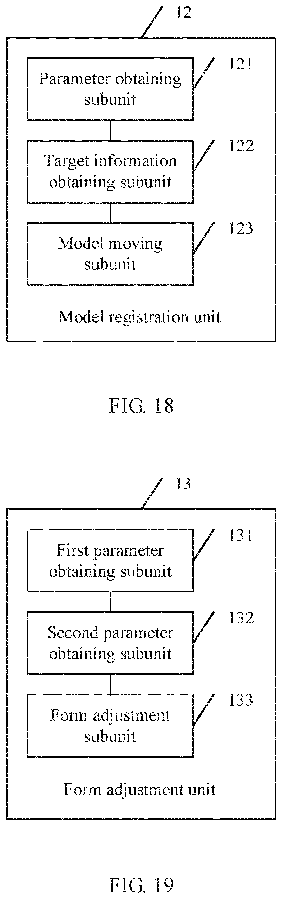

In an embodiment, as shown in FIG. 18, the model registration unit 12 includes: a parameter obtaining subunit 121, a target information obtaining subunit 122, and a model moving subunit 123.

The parameter obtaining subunit 121 is configured to obtain an angle rotation parameter and a position translation parameter of the sample oral cavity model relative to the three-dimensional face model, and obtain current coordinate information of the sample oral cavity model. The current coordinate information of the sample oral cavity model is a three-dimensional coordinate value of feature points of the sample oral cavity model in a current coordinate system, and current coordinate information of a prestored sample oral cavity model may be directly obtained from the oral cavity model library.

The target information obtaining subunit 122 is configured to obtain target coordinate information of the sample oral cavity model in the three-dimensional face model based on the angle rotation parameter, the position translation parameter, the current coordinate information, coordinate information of the three-dimensional face model, and coordinate information of an average face model.

The model moving subunit 123 is configured to move the sample oral cavity model to a target position indicated by the target coordinate information.

In an embodiment, the target information obtaining subunit 122 is configured to:obtain an identity feature parameter of a face image in the user picture, and obtain the coordinate information of the three-dimensional face model based on the identity feature parameter, an identity feature base, and the coordinate information of the average face model; calculate a first area of a projection of the coordinate information of the three-dimensional face model on a plane and a second area of a projection of the coordinate information of the average face model on the plane, and calculate a first ratio of the first area to the second area; and obtain the target coordinate information of the sample oral cavity model in the three-dimensional face model based on the first ratio, the angle rotation parameter, the position translation parameter, and the current coordinate information.

The form adjustment unit 13 is configured to perform form adjustment on an oral cavity form of the registered sample oral cavity model by using an expression parameter of the three-dimensional face model to generate a target oral cavity model.

In an embodiment, as shown in FIG. 19, the form adjustment unit 13 includes: a first parameter obtaining subunit 131, a second parameter obtaining subunit 132, and a form adjustment subunit 133.

The first parameter obtaining subunit 131 is configured to obtain the expression parameter of the three-dimensional face model, and obtain an oral cavity opening and closing parameter of the sample oral cavity model based on the expression parameter and a linkage weight.

The second parameter obtaining subunit 132 is configured to obtain a tongue stretching parameter and a tongue swinging parameter indicated by the expression parameter from an oral cavity expression parameter set.

The form adjustment subunit 133 is configured to perform form adjustment on the oral cavity form of the sample oral cavity model based on the oral cavity opening and closing parameter, the tongue stretching parameter, and the tongue swinging parameter.

The brightness adjustment unit 15 is configured to perform brightness adjustment on an oral cavity brightness value of the sample oral cavity model subjected to the form adjustment by using a face skin color brightness value of the user picture.

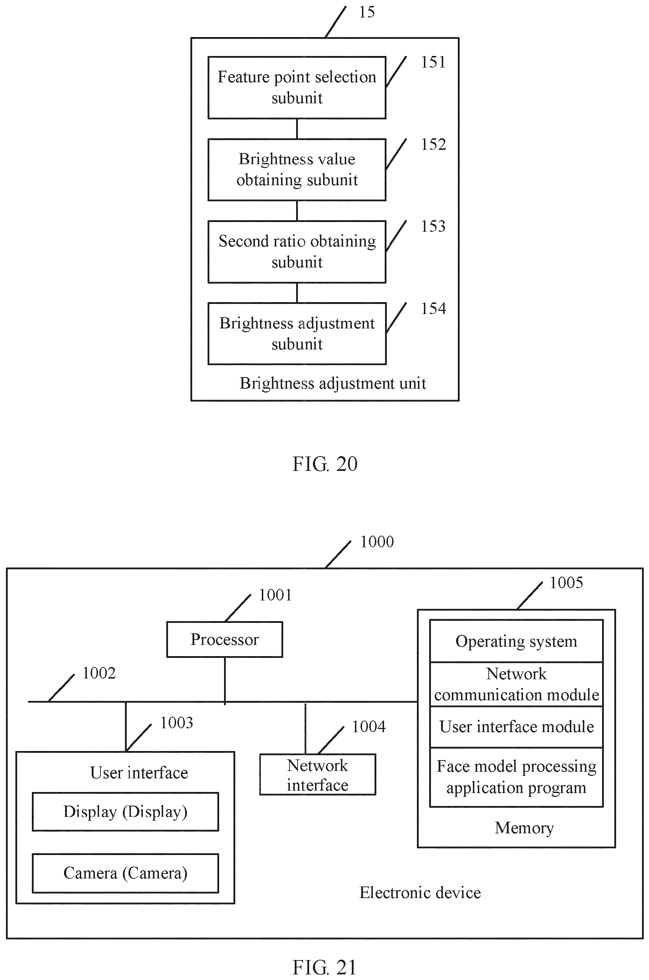

In an embodiment, as shown in FIG. 20, the brightness adjustment unit 15 includes: a feature point selection subunit 151, a brightness value obtaining subunit 152, a second ratio obtaining subunit 153 and a brightness adjustment subunit 154.

The feature point selection subunit 151 is configured to select a feature point set at a specified portion of the three-dimensional face model.

The brightness value obtaining subunit 152 is configured to obtain a skin color brightness value of each of feature points in the feature point set in the user picture and a skin color brightness value of the feature point in a reference picture.

The second ratio obtaining subunit 153 is configured to calculate a second ratio of the skin color brightness value of a feature point in the user picture to the skin color brightness value of the feature point in the reference picture.

The brightness adjustment subunit 154 is configured to perform brightness adjustment on the oral cavity lightness value of the sample oral cavity model based on the second ratio.

The expression model generating unit 14 is configured to generate, based on the three-dimensional face model and the target oral cavity model, a three-dimensional face expression model corresponding to the user picture.

The model conversion unit 16 is configured to convert the three-dimensional face expression model into an expression picture corresponding to the user picture.

The picture adding unit 17 is configured to add the expression picture to an expression picture sequence corresponding to the user picture.

The picture detection unit 18 is configured to obtain, in a case that it is detected that expression parameters corresponding to two adjacent frames of expression pictures in the expression picture sequence are discontinuous, continuous expression parameters between the expression parameters corresponding to the two adjacent frames of expression pictures.

The picture insertion unit 19 is configured to insert, between the two adjacent frames of expression pictures, an expression picture corresponding to the continuous expression parameters.

The expression picture corresponding to the obtained continuous expression parameters is inserted between two frames of discontinuous expression pictures, so that expressions continuously change.

For terms and manners such as the three-dimensional face model, the user picture, the expression model library, the oral cavity position parameters, the angle rotation parameters, the position translation parameter, the coordinate information, the calculating manner of the first ratio, the sample oral cavity model, and the adjustment manner of the oral cavity form, one may refer to the content in the foregoing embodiments of the face model processing method.

In the embodiment of the present disclosure, the three-dimensional face model corresponding to the user picture is obtained, and the sample oral cavity model in the oral cavity model library is selected for the three-dimensional face model. Then, the sample oral cavity model is registered into the three-dimensional face model by using the oral cavity position parameter in the three-dimensional face model, and form adjustment is performed on the oral cavity form of the registered sample oral cavity model by using the expression parameter of the three-dimensional face model to generate the target oral cavity model. The three-dimensional face expression model corresponding to the user picture is obtained based on the obtained three-dimensional face model and the generated target oral cavity model. According to the oral cavity position parameter and the expression parameter of the three-dimensional face model, the position and the size of the sample oral cavity model are configured and the oral cavity form is adjusted, so that the sample oral cavity model can keep consistent with the three-dimensional face model, thereby solving the problem of synthesis distortion of the sample oral cavity model and the three-dimensional face model, and thus obtaining the good synthesis effect of the generated three-dimensional face expression model.

A non-volatile computer-readable storage medium is further provided according to an embodiment of the present disclosure. The non-volatile computer-readable storage medium may store multiple instructions. The instructions are loaded and executed by a processor to perform the steps of the face model processing method in the embodiments shown in FIG. 1 to FIG. 14. For a specific execution process, one may refer to the specific description of the embodiments shown in FIG. 1 to FIG. 14.

FIG. 21 is a schematic structural diagram of an electronic device according to an embodiment of the present disclosure. As shown in FIG. 21, the electronic device 1000 may include: at least one processor 1001 such as a CPU, at least one network interface 1004, a user interface 1003, a memory 1005, and at least one communications bus 1002. The communications bus 1002 is configured to implement connection and communication between the components. The user interface 1003 may include a display and a camera. In an embodiment, the user interface 1003 may further include a standard wired interface and wireless interface. In an embodiment, the network interface 1004 may include a standard wired interface and wireless interface (for example, a Wi-Fi interface). The memory 1005 may be a high-speed RAM memory, or may be a non-volatile memory, for example, at least one magnetic disk memory. In an embodiment, the memory 1005 may further be at least one storage apparatus that is located far away from the processor 1001. As shown in FIG. 21, the memory 1005, as a non-volatile computer-readable storage medium, may include an operating system, a network communications module, a user interface module, and a face model processing application program.

In the electronic device 1000 shown in FIG. 21, the user interface 1003 is mainly configured to provide an input interface for a user and obtain data inputted by the user. The processor 1001 may be configured to invoke a computer program stored in the memory 1005 for face model processing. The computer program, when executed by the processor, causes the processor to perform the steps of the face model processing method in any of the foregoing embodiments.

A person of ordinary skill in the art may understand that all or some of the processes in the method of the foregoing embodiments may be implemented by using the computer program to instruct related hardware. The program may be stored in a non-volatile computer-readable storage medium. When the program is executed, the processes of the foregoing method embodiments may be performed. Any of the memory, storage, a database, or other media used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash. The volatile memory may include a random access memory (RAM) or an external cache. As an illustration instead of a limitation, the RAM may include various forms of

**EP 3 783 571 B1**

RAM, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

Preferred embodiments of the present invention are described above, and are not intended to limit the protection scope of the present invention. Therefore, variations made in accordance with the claims of the present disclosure shall fall within the scope of the present invention.

**Claims**

1. A face model processing method, executed by an electronic device, **characterized in that** the method comprises:

   obtaining (S101) a three-dimensional face model corresponding to a user picture, and selecting a sample oral cavity model in an oral cavity model library for the three-dimensional face model;
   registering (S102) the sample oral cavity model into the three-dimensional face model by using an oral cavity position parameter in the three-dimensional face model;
   performing (103) form adjustment on an oral cavity form of the registered sample oral cavity model by using an expression parameter of the three-dimensional face model to generate a target oral cavity model; and
   generating (S104), based on the three-dimensional face model and the target oral cavity model, a three-dimensional face expression model corresponding to the user picture.

2. The method according to claim 1, wherein the obtaining a three-dimensional face model corresponding to a user picture comprises:

   obtaining (S201) the user picture, and performing face recognition on the user picture to obtain a face image in the user picture; and
   obtaining (S202) a three-dimensional expression model from an expression model library, and synthesizing the face image with the three-dimensional expression model to generate the three-dimensional face model corresponding to the user picture.

3. The method according to claim 1, wherein the registering the sample oral cavity model into the three-dimensional face model by using an oral cavity position parameter in the three-dimensional face model comprises:

   obtaining (S204) an angle rotation parameter and a position translation parameter of the sample oral cavity model relative to the three-dimensional face model, and obtaining current coordinate information of the sample oral cavity model;
   obtaining (S205) target coordinate information of the sample oral cavity model in the three-dimensional face model, based on the angle rotation parameter, the position translation parameter, the current coordinate information, coordinate information of the three-dimensional face model, and coordinate information of an average face model; and
   moving (S206) the sample oral cavity model to a target position indicated by the target coordinate information.

4. The method according to claim 3, wherein the obtaining target coordinate information of the sample oral cavity model in the three-dimensional face model based on the angle rotation parameter, the position translation parameter, the current coordinate information, coordinate information of the three-dimensional face model, and coordinate information of an average face model comprises:

   obtaining (S301) an identity feature parameter of a face image in the user picture, and obtaining the coordinate information of the three-dimensional face model based on the identity feature parameter, an identity feature base, and the coordinate information of the average face model;
   calculating (S302) a first area of a projection of the coordinate information of the three-dimensional face model on a plane, calculating a second area of a projection of the coordinate information of the average face model on the plane, and calculating a first ratio of the first area to the second area; and
   obtaining (S303) the target coordinate information of the sample oral cavity model in the three-dimensional face model based on the first ratio, the angle rotation parameter, the position translation parameter, and the current coordinate information.

5. The method according to claim 1, wherein the performing form adjustment on an oral cavity form of the registered sample oral cavity model by using an expression parameter of the three-dimensional face model comprises:

> obtaining (S207) the expression parameter of the three-dimensional face model, and
> obtaining an oral cavity opening and closing parameter of the sample oral cavity model based on the expression parameter and a linkage weight;
> obtaining (S208) a tongue stretching parameter and a tongue swinging parameter indicated by the expression parameter from an oral cavity expression parameter set; and
> performing (S209) form adjustment on the oral cavity form of the sample oral cavity model based on the oral cavity opening and closing parameter, the tongue stretching parameter, and the tongue swinging parameter.

6. The method according to claim 1, wherein after the performing form adjustment on an oral cavity form of the registered sample oral cavity model by using an expression parameter of the three-dimensional face model, the method further comprises:
performing (S210) brightness adjustment on an oral cavity brightness value of the sample oral cavity model subjected to the form adjustment by using a face skin color brightness value of the user picture.

7. The method according to claim 6, wherein the performing brightness adjustment on an oral cavity brightness value of the sample oral cavity model subjected to the form adjustment by using a face skin color brightness value of the user picture comprises:

> selecting (S401) a feature point set at a specified portion of the three-dimensional face model;
> obtaining (S402) a skin color brightness value of each of feature points in the feature point set in the user picture and a skin color brightness value of the feature point in a reference picture;
> calculating (S403) a second ratio of the skin color brightness value of the feature point in the user picture to the skin color brightness value of the feature point in the reference picture; and
> performing (S404) brightness adjustment on the oral cavity brightness value of the sample oral cavity model based on the second ratio.

8. The method according to claim 1, wherein after the generating, based on the three-dimensional face model and the target oral cavity model, a three-dimensional face expression model corresponding to the user picture, the method further comprises:

> converting (S212) the three-dimensional face expression model into an expression picture corresponding to the user picture;
> adding (S213) the expression picture to an expression picture sequence corresponding to the user picture;
> obtaining (S214), in a case that it is detected that expression parameters corresponding to two adjacent frames of expression pictures in the expression picture sequence are discontinuous, continuous expression parameters between the expression parameters corresponding to the two adjacent frames of expression pictures; and
> inserting (S215), between the two adjacent frames of expression pictures, an expression picture corresponding to the continuous expression parameters.

9. A face model processing apparatus, **characterized in that** the apparatus comprising:

> a model obtaining unit (11), configured to obtain (5101) a three-dimensional face model corresponding to a user picture, and select a sample oral cavity model in an oral cavity model library for the three-dimensional face model;
> a model registration unit (12), configured to register (S102) the sample oral cavity model into the three-dimensional face model by using an oral cavity position parameter in the three-dimensional face model;
> a form adjustment unit (13), configured to perform (S103) form adjustment on an oral cavity form of the registered sample oral cavity model by using an expression parameter of the three-dimensional face model to generate a target oral cavity model; and
> an expression model generating unit (14) configured to generate (S104), based on the three-dimensional face model and the target oral cavity model, a three-dimensional face expression model corresponding to the user picture.

10. The apparatus according to claim 9, wherein the model obtaining unit comprises:

> a face image obtaining subunit (111), configured to obtain (S201) the user picture, and perform face recognition on the user picture to obtain a face image in the user picture; and

a face model generating sububit (112), configured to obtain (S202) a three-dimensional expression model from an expression model library, and synthesize the face image with the three-dimensional expression model to generate the three-dimensional face model corresponding to the user picture.

**11.** The apparatus according to claim 9, wherein the model registration unit comprises:

a parameter obtaining subunit (121), configured to obtain (S204) an angle rotation parameter and a position translation parameter of the sample oral cavity model relative to the three-dimensional face model, and obtain current coordinate information of the sample oral cavity model;

a target information obtaining subunit (122), configured to obtain (S205) target coordinate information of the sample oral cavity model in the three-dimensional face model based on the angle rotation parameter, the position translation parameter, the current coordinate information, coordinate information of the three-dimensional face model, and coordinate information of an average face model; and

a model moving subunit (123), configured to move (S206) the sample oral cavity model to a target position indicated by the target coordinate information.

**12.** The apparatus according to claim 11, wherein the target information obtaining subunit (123) is configured to:

obtain (S301) an identity feature parameter of a face image in the user picture, and obtain the coordinate information of the three-dimensional face model based on the identity feature parameter, an identity feature base, and the coordinate information of the average face model;

calculate (S302) a first area of a projection of the coordinate information of the three-dimensional face model on a plane and a second area of a projection of the coordinate information of the average face model on the plane, and calculate a first ratio of the first area to the second area; and

obtain (S303) the target coordinate information of the sample oral cavity model in the three-dimensional face model based on the first ratio, the angle rotation parameter, the position translation parameter, and the current coordinate information.

**13.** The apparatus according to claim 9, wherein the form adjustment unit comprises:

a first parameter obtaining subunit (131), configured to obtain (S207) the expression parameter of the three-dimensional face model, and obtain an oral cavity opening and closing parameter of the sample oral cavity model based on the expression parameter and a linkage weight;

a second parameter obtaining subunit (132), configured to obtain (S208) a tongue stretching parameter and a tongue swinging parameter indicated by the expression parameter in an oral cavity expression parameter set; and

a form adjustment subunit (133), configured to perform (S209) form adjustment on the oral cavity form of the sample oral cavity model based on the oral cavity opening and closing parameter, the tongue stretching parameter, and the tongue swinging parameter.

**14.** A non-volatile computer-readable storage medium storing a computer program, wherein the computer program, when executed by one or more processors, causes the one or more processors to perform the face model processing method according to any one of claims 1 to 8.

**Patentansprüche**

**1.** Gesichtsmodellverarbeitungsverfahren, das von einer elektronischen Vorrichtung ausgeführt wird, **dadurch gekennzeichnet, dass** das Verfahren Folgendes umfasst:

Erhalten (S101) eines dreidimensionalen Gesichtsmodells, das einem Benutzerbild entspricht, und Auswählen eines Beispielmundhöhlenmodells in einer Mundhöhlenmodellbibliothek für das dreidimensionale Gesichtsmodell;

Registrieren (S102) des Beispielmundhöhlenmodells im dreidimensionalen Gesichtsmodell unter Verwendung eines Mundhöhlenpositionsparameters im dreidimensionalen Gesichtsmodell;

Durchführen (S103) einer Formanpassung an einer Mundhöhlenform des registrierten Beispielmundhöhlenmodells unter Verwendung eines Ausdrucksparameters des dreidimensionalen Gesichtsmodells, um ein Zielmundhöhlenmodell zu erzeugen; und

Erzeugen (S104) eines dreidimensionalen Gesichtsausdrucksmodells, das dem Benutzerbild entspricht, auf Basis des dreidimensionalen Gesichtsmodells und des Zielmundhöhlenmodells.

2. Verfahren nach Anspruch 1, wobei das Erhalten eines dreidimensionalen Gesichtsmodells, das einem Benutzerbild entspricht, Folgendes umfasst:

Erhalten (S201) des Benutzerbildes und Durchführen einer Gesichtserkennung am Benutzerbild, um ein Gesichtsbild im Benutzerbild zu erhalten; und

Erhalten (S202) eines dreidimensionalen Ausdrucksmodells aus einer Ausdrucksmodellbibliothek und Synthetisieren des Gesichtsbildes mit dem dreidimensionalen Ausdrucksmodell, um das dreidimensionale Gesichtsmodell zu erzeugen, das dem Benutzerbild entspricht.

3. Verfahren nach Anspruch 1, wobei das Registrieren des Beispielmundhöhlenmodells im dreidimensionalen Gesichtsmodell unter Verwendung eines Mundhöhlenpositionsparameters im dreidimensionalen Gesichtsmodell Folgendes umfasst:

Erhalten (S204) eines Winkelrotationsparameters und eines Positionsumsetzparameters des Beispielmundhöhlenmodells relativ zum dreidimensionalen Gesichtsmodell und Erhalten von aktuellen Koordinateninformationen des Beispielmundhöhlenmodells;

Erhalten (S205) von Zielkoordinateninformationen des Beispielmundhöhlenmodells im dreidimensionalen Gesichtsmodell auf Basis des Winkelrotationsparameters, des Positionsumsetzparameters, der aktuellen Koordinateninformationen, Koordinateninformationen des dreidimensionalen Gesichtsmodells und Koordinateninformationen eines durchschnittlichen Gesichtsmodells; und

Bewegen (S206) des Beispielmundhöhlenmodells zu einer Zielposition, die von den Zielkoordinateninformationen angezeigt wird.

4. Verfahren nach Anspruch 3, wobei das Erhalten von Zielkoordinateninformationen des Beispielmundhöhlenmodells im dreidimensionalen Gesichtsmodell auf Basis des Winkelrotationsparameters, des Positionsumsetzparameters, der aktuellen Koordinateninformationen, Koordinateninformationen des dreidimensionalen Gesichtsmodells und Koordinateninformationen eines durchschnittlichen Gesichtsmodells Folgendes umfasst:

Erhalten (S301) eines Identitätsmerkmalsparameters eines Gesichtsbildes im Benutzerbild und Erhalten der Koordinateninformationen des dreidimensionalen Gesichtsmodells auf Basis des Identitätsmerkmalsparameters, einer Identitätsmerkmalsbasis und der Koordinateninformationen des durchschnittlichen Gesichtsmodells;

Berechnen (S302) eines ersten Bereichs einer Projektion der Koordinateninformationen des dreidimensionalen Gesichtsmodells auf eine Ebene, Berechnen eines zweiten Bereichs einer Projektion der Koordinateninformationen des durchschnittlichen Gesichtsmodells auf die Ebene und Berechnen eines ersten Verhältnisses des ersten Bereichs zum zweiten Bereich; und

Erhalten (S303) der Zielkoordinateninformationen des Beispielmundhöhlenmodells im dreidimensionalen Gesichtsmodell auf Basis des ersten Verhältnisses, des Winkelrotationsparameters, des Positionsumsetzparameters und der aktuellen Koordinateninformationen.

5. Verfahren nach Anspruch 1, wobei das Durchführen einer Formanpassung an einer Mundhöhlenform des registrierten Beispielmundhöhlenmodells unter Verwendung eines Ausdrucksparameters des dreidimensionalen Gesichtsmodells Folgendes umfasst:

Erhalten (S207) des Ausdrucksparameters des dreidimensionalen Gesichtsmodells und Erhalten eines Mundhöhlenöffnungs- und -schließparameters des Beispielmundhöhlenmodells auf Basis des Ausdrucksparameters und einer Verlinkungsgewichtung;

Erhalten (S208) eines Zungenherausstreckparameters und eines Zungenschwingparameters, die vom Ausdrucksparameter angezeigt werden, aus einem Mundhöhenausdrucksparametersatz; und

Durchführen (S209) einer Formanpassung der Mundhöhlenform des Beispielmundhöhlenmodells am Mundhöhlenöffnungs- und -schließparameter, am Zungenherausstreckparameter und am Zungenschwingparameter.

6. Verfahren nach Anspruch 1, wobei das Verfahren nach dem Durchführen einer Formanpassung an einer Mundhöhlenform des registrierten Beispielmundhöhlenmodells unter Verwendung eines Ausdrucksparameters des dreidimensionalen Gesichtsmodells ferner Folgendes umfasst:

Durchführen (S210) einer Helligkeitsanpassung an einem Mundhöhlenhelligkeitswert des Beispielmundhöhlenmodells, das der Formanpassung unterzogen wird, unter Verwendung eines Gesichtshautfarbhelligkeitswertes des Benutzerbildes.

7.  Verfahren nach Anspruch 6, wobei das Durchführen einer Helligkeitsanpassung an einem Mundhöhlenhelligkeitswert des Beispielmundhöhlenmodells, das der Formanpassung unterzogen wird, unter Verwendung eines Gesichtshautfarbhelligkeitswertes des Benutzerbildes Folgendes umfasst:

> Auswählen (S401) eines Merkmalspunktsatzes an einem spezifizierten Abschnitt des dreidimensionalen Gesichtsmodells;
> Erhalten (S402) eines Hautfarbhelligkeitswertes von jedem der Merkmalspunkte im Merkmalspunktsatz im Benutzerbild und eines Hautfarbhelligkeitswertes des Merkmalspunktes in einem Referenzbild;
> Berechnen (S403) eines zweiten Verhältnisses des Hautfarbhelligkeitswertes des Merkmalspunktes im Benutzerbild zum Hautfarbhelligkeitswert des Merkmalspunktes im Referenzbild; und
> Durchführen (S404) einer Helligkeitsanpassung am Mundhöhlenhelligkeitswert des Beispielmundhöhlenmodells auf Basis des zweiten Verhältnisses.

8.  Verfahren nach Anspruch 1, wobei nach dem Erzeugen eines dreidimensionalen Gesichtsausdrucksmodells, das dem Benutzerbild entspricht, auf Basis des dreidimensionalen Gesichtsmodells und des Zielmundhöhlenmodells das Verfahren ferner Folgendes umfasst:

> Umwandeln (S212) des dreidimensionalen Gesichtsausdrucksmodells in ein Ausdrucksbild, das dem Benutzerbild entspricht;
> Hinzufügen (S213) des Ausdrucksbildes zu einer Ausdrucksbildsequenz, die dem Benutzerbild entspricht;
> in einem Fall, in dem detektiert wird, dass Ausdrucksparameter, die zwei benachbarten Frames von Ausdrucksbildern in der Ausdrucksbildsequenz entsprechen, diskontinuierlich sind, Erhalten (S214) von kontinuierlichen Ausdrucksparametern zwischen den Ausdrucksparametern, die den zwei benachbarten Frames der Ausdrucksbilder entsprechen; und
> Einfügen (S215) eines Ausdrucksbildes, das den kontinuierlichen Ausdrucksparametern entspricht, zwischen die zwei benachbarten Frames der Ausdrucksbilder.

9.  Gesichtsmodellverarbeitungseinrichtung, **dadurch gekennzeichnet, dass** die Einrichtung Folgendes umfasst:

> eine Modellerhaltungseinheit (11), die dazu ausgelegt ist, ein dreidimensionales Gesichtsmodell zu erhalten (S101), das einem Benutzerbild entspricht, und ein Beispielmundhöhlenmodell in einer Mundhöhlenmodellbibliothek für das dreidimensionale Gesichtsmodell auszuwählen;
> eine Modellregistrierungseinheit (12), die dazu ausgelegt ist, das Beispielmundhöhlenmodell im dreidimensionalen Gesichtsmodell unter Verwendung eines Mundhöhlenpositionsparameters im dreidimensionalen Gesichtsmodell zu registrieren (S102);
> eine Formanpassungseinheit (13), die dazu ausgelegt ist, eine Formanpassung an einer Mundhöhlenform des registrierten Beispielmundhöhlenmodells unter Verwendung eines Ausdrucksparameters des dreidimensionalen Gesichtsmodells durchzuführen (S103), um ein Zielmundhöhlenmodell zu erzeugen; und
> eine Ausdrucksmodellerzeugungseinheit (14), die dazu ausgelegt ist, ein dreidimensionales Gesichtsausdrucksmodell, das dem Benutzerbild entspricht, auf Basis des dreidimensionalen Gesichtsmodells und des Zielmundhöhlenmodells zu erzeugen (S104) .

10. Einrichtung nach Anspruch 9, wobei die Modellerhaltungseinheit Folgendes umfasst:

> eine Gesichtsbilderhaltungsuntereinheit (111), die dazu ausgelegt ist, das Benutzerbild zu erhalten (S201) und eine Gesichtserkennung am Benutzerbild durchzuführen, um ein Gesichtsbild im Benutzerbild zu erhalten; und
> eine Gesichtsmodellerzeugungsuntereinheit (112), die dazu ausgelegt ist, ein dreidimensionales Ausdrucksmodell aus einer Ausdrucksmodellbibliothek zu erhalten (S202) und das Gesichtsbild mit dem dreidimensionalen Ausdrucksmodell zu synthetisieren, um das dreidimensionale Gesichtsmodell zu erzeugen, das dem Benutzerbild entspricht.

11. Einrichtung nach Anspruch 9, wobei die Modellregistrierungseinheit Folgendes umfasst:

> eine Parametererhaltungsuntereinheit (121), die dazu ausgelegt ist, einen Winkelrotationsparameter und einen Positionsumsetzparameter des Beispielmundhöhlenmodells relativ zum dreidimensionalen Gesichtsmodell zu erhalten (S204) und aktuelle Koordinateninformationen des Beispielmundhöhlenmodells zu erhalten;
eine Zielinformationserhaltungsuntereinheit (122), die dazu ausgelegt ist, Zielkoordinateninformationen des Beispielmundhöhlenmodells im dreidimensionalen Gesichtsmodell auf Basis des Winkelrotationsparameters, des Positionsumsetzparameters, der aktuellen Koordinateninformationen, Koordinateninformationen des dreidimensionalen Gesichtsmodells und Koordinateninformationen eines durchschnittlichen Gesichtsmodells zu erhalten (S205); und
eine Modellbewegungsuntereinheit (123), die dazu ausgelegt ist, das Beispielmundhöhlenmodell zu einer Zielposition zu bewegen (S206), die von den Zielkoordinateninformationen angezeigt wird.

**12.** Einrichtung nach Anspruch 11, wobei die Zielinformationserhaltungsuntereinheit (123) zu Folgendem ausgelegt ist:

Erhalten (S301) eines Identitätsmerkmalsparameters eines Gesichtsbildes im Benutzerbild und Erhalten der Koordinateninformationen des dreidimensionalen Gesichtsmodells auf Basis des Identitätsmerkmalsparameters, einer Identitätsmerkmalsbasis und der Koordinateninformationen des durchschnittlichen Gesichtsmodells;
Berechnen (S302) eines ersten Bereichs einer Projektion der Koordinateninformationen des dreidimensionalen Gesichtsmodells auf eine Ebene und eines zweiten Bereichs einer Projektion der Koordinateninformationen des durchschnittlichen Gesichtsmodells auf die Ebene und Berechnen eines ersten Verhältnisses des ersten Bereichs zum zweiten Bereich; und
Erhalten (S303) der Zielkoordinateninformationen des Beispielmundhöhlenmodells im dreidimensionalen Gesichtsmodell auf Basis des ersten Verhältnisses, des Winkelrotationsparameters, des Positionsumsetzparameters und der aktuellen Koordinateninformationen.

**13.** Einrichtung nach Anspruch 9, wobei die Formanpassungseinheit Folgendes umfasst:

eine erste Parametererhaltungsuntereinheit (131), die dazu ausgelegt ist, den Ausdrucksparameter des dreidimensionalen Gesichtsmodells zu erhalten (S207) und einen Mundhöhlenöffnungs- und -schließparameter des Beispielmundhöhlenmodells auf Basis des Ausdrucksparameters und einer Verlinkungsgewichtung zu erhalten;
eine zweite Parametererhaltungsuntereinheit (132), die dazu ausgelegt ist, einen Zungenherausstreckparameter und einen Zungenschwingparameter, die vom Ausdrucksparameter angezeigt werden, in einem Mundhöhenausdrucksparametersatz zu erhalten (S208); und
eine Formanpassungsuntereinheit (133), die dazu ausgelegt ist, eine Formanpassung der Mundhöhlenform des Beispielmundhöhlenmodells am Mundhöhlenöffnungs- und - schließparameter, am Zungenherausstreckparameter und am Zungenschwingparameter durchzuführen (S209).

**14.** Nichtflüchtiges computerlesbares Speichermedium, auf dem ein Computerprogramm gespeichert ist, wobei das Computerprogramm, wenn es von einem oder mehreren Prozessoren ausgeführt wird, den einen oder die mehreren Prozessoren veranlasst, das Gesichtsmodellverarbeitungsverfahren nach einem der Ansprüche 1 bis 8 durchzuführen.

**Revendications**

**1.** Procédé de traitement de modèle de visage exécuté par un dispositif électronique, **caractérisé en ce que** le procédé comprend :

l'obtention (S101) d'un modèle de visage tridimensionnel correspondant à une photo d'utilisateur, et
la sélection d'un modèle de cavité orale échantillon dans une bibliothèque de modèles de cavité orale pour le modèle de visage tridimensionnel ;
l'enregistrement (S102) du modèle de cavité orale échantillon dans le modèle de visage tridimensionnel en utilisant un paramètre de position de cavité orale dans le modèle de visage tridimensionnel ;
la réalisation (S103) d'un ajustement de forme sur une forme de cavité orale du modèle de cavité orale échantillon enregistré en utilisant un paramètre d'expression du modèle de visage tridimensionnel pour générer un modèle de cavité orale cible ; et
la génération (S104), sur la base du modèle de visage tridimensionnel et du modèle de cavité orale cible, d'un modèle d'expression faciale en trois dimensions correspondant à la photo d'utilisateur.

**2.** Procédé selon la revendication 1, dans lequel l'obtention d'un modèle de visage tridimensionnel correspondant à une photo d'utilisateur comprend :

l'obtention (S201) de la photo d'utilisateur, et la réalisation d'une reconnaissance faciale sur la photo d'utilisateur pour obtenir une image faciale dans la photo d'utilisateur ; et

l'obtention (S202) d'un modèle d'expression tridimensionnel à partir d'une bibliothèque de modèles d'expression, et la synthèse de l'image faciale avec le modèle d'expression tridimensionnel pour générer le modèle de visage tridimensionnel correspondant à la photo d'utilisateur.

3. Procédé selon la revendication 1, dans lequel l'enregistrement du modèle de cavité orale échantillon dans le modèle de visage tridimensionnel en utilisant un paramètre de position de cavité orale dans le modèle de visage tridimensionnel comprend :

l'obtention (S204) d'un paramètre de rotation angulaire et d'un paramètre de translation de position du modèle de cavité orale échantillon par rapport au modèle de visage tridimensionnel, et l'obtention d'informations de coordonnées actuelles du modèle de cavité orale échantillon ;

l'obtention (S205) d'informations de coordonnées cibles du modèle de cavité orale échantillon dans le modèle de visage tridimensionnel sur la base du paramètre de rotation angulaire, du paramètre de translation de position, des informations de coordonnées actuelles, des informations de coordonnées du modèle de visage tridimensionnel et des informations de coordonnées d'un modèle de visage moyen ; et

le déplacement (S206) du modèle de cavité orale échantillon vers une position cible indiquée par les informations de coordonnées cibles.

4. Procédé selon la revendication 3, dans lequel l'obtention d'informations de coordonnées cibles du modèle de cavité orale échantillon dans le modèle de visage tridimensionnel sur la base du paramètre de rotation angulaire, du paramètre de translation de position, des informations de coordonnées actuelles, des informations de coordonnées du modèle de visage tridimensionnel et des informations de coordonnées d'un modèle de visage moyen comprend :

l'obtention (S301) d'un paramètre de caractéristique d'identité d'une image faciale dans la photo d'utilisateur, et l'obtention des informations de coordonnées du modèle de visage tridimensionnel sur la base du paramètre de caractéristique d'identité, d'une base de caractéristique d'identité et des informations de coordonnées du modèle de visage moyen ;

le calcul (S302) d'une première zone d'une projection des informations de coordonnées du modèle de visage tridimensionnel sur un plan, le calcul d'une deuxième zone d'une projection des informations de coordonnées du modèle de visage moyen sur le plan, et le calcul d'un premier rapport de la première zone sur la deuxième zone ; et

l'obtention (S303) des informations de coordonnées cibles du modèle de cavité orale échantillon dans le modèle de visage tridimensionnel sur la base du premier rapport, du paramètre de rotation angulaire, du paramètre de translation de position et des informations de coordonnées actuelles.

5. Procédé selon la revendication 1, dans lequel la réalisation d'un ajustement de forme sur une forme de cavité orale du modèle de cavité orale échantillon enregistré en utilisant un paramètre d'expression du modèle de visage tridimensionnel comprend :

l'obtention (S207) du paramètre d'expression du modèle de visage tridimensionnel, et l'obtention d'un paramètre d'ouverture et de fermeture de cavité orale du modèle de cavité orale échantillon sur la base du paramètre d'expression et d'un poids de liaison ;

l'obtention (5208) d'un paramètre d'étirement de la langue et d'un paramètre de battement de langue indiqués par le paramètre d'expression d'un ensemble de paramètres d'expression de cavité orale ; et

la réalisation (S209) d'un ajustement de forme sur la forme de cavité orale du modèle de cavité orale échantillon sur la base du paramètre d'ouverture et de fermeture de cavité orale, du paramètre d'étirement de la langue et du paramètre de battement de langue.

6. Procédé selon la revendication 1, dans lequel, après le la réalisation d'un ajustement de forme sur une forme de cavité orale du modèle de cavité orale échantillon enregistré en utilisant un paramètre d'expression du modèle de visage tridimensionnel, le procédé comprend en outre :

la réalisation (S210) d'un ajustement de luminosité sur une valeur de luminosité de cavité orale du modèle de cavité orale échantillon soumis à l'ajustement de forme en utilisant une valeur de luminosité de couleur de peau du visage de la photo d'utilisateur.

7. Procédé selon la revendication 6, dans lequel la réalisation d'un ajustement de luminosité sur une valeur de luminosité de cavité orale du modèle de cavité orale échantillon soumis à l'ajustement de forme en utilisant une valeur de luminosité de couleur de peau du visage de la photo d'utilisateur comprend :

la sélection (S401) d'un ensemble de points caractéristiques sur une partie spécifiée du modèle de visage tridimensionnel ;

l'obtention (S402) d'une valeur de luminosité de couleur de peau de chacun des points caractéristiques de l'ensemble de points caractéristiques dans la photo d'utilisateur et d'une valeur de luminosité de couleur de peau du point caractéristique dans une photo de référence ;

le calcul (S403) d'un deuxième rapport de la valeur de luminosité de couleur de peau du point caractéristique dans la photo d'utilisateur sur la valeur de luminosité de couleur de peau du point caractéristique dans la photo de référence ; et

la réalisation (S404) d'un ajustement de luminosité sur la valeur de luminosité de cavité orale du modèle de cavité orale échantillon sur la base du deuxième rapport.

8. Procédé selon la revendication 1, dans lequel, après la génération, sur la base du modèle de visage tridimensionnel et du modèle de cavité orale cible, d'un modèle d'expression faciale en trois dimensions correspondant à la photo d'utilisateur, le procédé comprend en outre :

la conversion (S212) du modèle d'expression faciale en trois dimensions dans une photo d'expression correspondant à la photo d'utilisateur ;

l'ajout (S213) de la photo d'expression à une séquence de photos d'expression correspondant à la photo d'utilisateur ;

l'obtention (S214), dans le cas où il est détecté que les paramètres d'expression correspondant à deux trames adjacentes de photos d'expression dans la séquence de photos d'expression sont discontinus, de paramètres d'expression continus entre les paramètres d'expression correspondant au deux trames adjacentes de photos d'expression ; et

l'insertion (S215), entre les deux trames adjacentes de photos d'expression, d'une photo d'expression correspondant aux paramètres d'expression continus.

9. Appareil de traitement de modèle de visage, **caractérisé en ce que** l'appareil comprend :

une unité d'obtention de modèle (11), configurée pour obtenir (S101) un modèle de visage tridimensionnel correspondant à une photo d'utilisateur, et sélectionner un modèle de cavité orale échantillon dans une bibliothèque de modèles de cavité orale pour le modèle de visage tridimensionnel ;

une unité d'enregistrement de modèle (12), configurée pour enregistrer (S102) le modèle de cavité orale échantillon dans le modèle de visage tridimensionnel en utilisant un paramètre de position de cavité orale dans le modèle de visage tridimensionnel ;

une unité d'ajustement de forme (13), configurée pour réaliser (S103) un ajustement de forme sur une forme de cavité orale du modèle de cavité orale échantillon enregistré en utilisant un paramètre d'expression du modèle de visage tridimensionnel pour générer un modèle de cavité orale cible ; et

une unité de génération de modèle d'expression (14) configurée pour générer (S104), sur la base du modèle de visage tridimensionnel et du modèle de cavité orale cible, un modèle d'expression faciale en trois dimensions correspondant à la photo d'utilisateur.

10. Appareil selon la revendication 9, dans lequel l'unité d'obtention de modèle comprend :

une sous-unité d'obtention d'image faciale (111), configurée pour obtenir (S201) la photo d'utilisateur, et réaliser une reconnaissance faciale sur la photo d'utilisateur afin d'obtenir une image faciale dans la photo d'utilisateur ; et

une sous-unité de génération de modèle de visage (112), configurée pour obtenir (S202) un modèle d'expression tridimensionnel à partir d'une bibliothèque de modèles d'expression, et synthétiser l'image faciale avec le modèle d'expression tridimensionnel pour générer le modèle de visage tridimensionnel correspondant à la photo d'utilisateur.

11. Appareil selon la revendication 9, dans lequel l'unité d'enregistrement de modèle comprend :

une sous-unité d'obtention de paramètre (121), configurée pour obtenir (S204) un paramètre de rotation angulaire et une paramètre de translation de position du modèle de cavité orale échantillon par rapport au modèle de visage tridimensionnel, et obtenir des informations de coordonnées actuelles du modèle de cavité orale échantillon ;

une sous-unité d'obtention d'informations cibles (122), configurée pour obtenir (S205) des informations de coordonnées cibles du modèle de cavité orale échantillon dans le modèle de visage tridimensionnel sur la base du paramètre de rotation angulaire, du paramètre de translation de position, des informations de coordonnées actuelles, des informations de coordonnées du modèle de visage tridimensionnel et des informations de coordonnées d'un modèle de visage moyen ; et
une sous-unité de déplacement de modèle (123), configurée pour déplacer (S206) le modèle de cavité orale échantillon vers une position cible indiquée par les informations de coordonnées cibles.

12. Appareil selon la revendication 11, dans lequel la sous-unité d'obtention d'informations cibles (123) est configurée pour :

obtenir (S301) un paramètre de caractéristique d'identité d'une image faciale dans la photo d'utilisateur, et obtenir les informations de coordonnées du modèle de visage tridimensionnel sur la base du paramètre de caractéristique d'identité, d'une base de caractéristique d'identité et des informations de coordonnées du modèle de visage moyen ;
calculer (S302) une première zone d'une projection des informations de coordonnées du modèle de visage tridimensionnel sur un plan et une deuxième zone d'une projection des informations de coordonnées du modèle de visage moyen sur le plan, et calculer un premier rapport de la première zone sur la deuxième zone ; et
obtenir (S303) les informations de coordonnées cibles du modèle de cavité orale échantillon dans le modèle de visage tridimensionnel sur la base du premier rapport, du paramètre de rotation angulaire, du paramètre de translation de position et des informations de coordonnées actuelles.

13. Appareil selon la revendication 9, dans lequel l'unité d'ajustement de forme comprend :

une première sous-unité d'obtention de paramètre (131), configurée pour obtenir (S207) le paramètre d'expression du modèle de visage tridimensionnel, et obtenir un paramètre d'ouverture et de fermeture de cavité orale du modèle de cavité orale échantillon sur la base du paramètre d'expression et d'un poids de liaison ;
une deuxième sous-unité d'obtention de paramètre (132), configurée pour obtenir (S208) un paramètre d'étirement de la langue et un paramètre de battement de langue indiqués par le paramètre d'expression d'un ensemble de paramètres d'expression de cavité orale ; et
une sous-unité d'ajustement de forme (133), configurée pour réaliser (S209) un ajustement de forme sur la forme de cavité orale du modèle de cavité orale échantillon sur la base du paramètre d'ouverture et de fermeture de cavité orale, du paramètre d'étirement de la langue et du paramètre de battement de langue.

14. Support de stockage non volatile lisible par ordinateur stockant un programme informatique, dans lequel le programme informatique, lorsqu'il est exécuté par un ou plusieurs processeurs, amène les un ou plusieurs processeurs à réaliser le procédé de traitement de modèle de visage selon l'une des revendications 1 à 8.

FIG. 1a

| Obtain a three-dimensional face model corresponding to a user picture, and select a sample oral cavity model in an oral cavity model library for the three-dimensional face model | S101 |

↓

| Register the sample oral cavity model into the three-dimensional face model by using an oral cavity position parameter in the three-dimensional face model | S102 |

↓

| Perform form adjustment on an oral cavity form of the registered sample oral cavity model by using an expression parameter of the three-dimensional face model to generate a target oral cavity model | S103 |

↓

| Generate, based on the three-dimensional face model and the target oral cavity model, a three-dimensional face expression model corresponding to the user picture | S104 |

**Figure 1b**

FIG. 2

FIG. 3

FIG. 4

FIG. 5

Obtain a user picture, and perform face recognition on the user picture to obtain a face image in the user picture `S201`

Obtain a three-dimensional expression model from an expression model library, and synthesize the face image with the thee-dimensional expression model to generate a three-dimensional face model corresponding to the user picture `S202`

Select a sample oral cavity model in the oral cavity model library `S203`

Obtain an angle rotation parameter and a position translation parameter of the sample oral cavity model relative to the three-dimensional face model, and obtain current coordinate information of the sample oral cavity model `S204`

Obtain target coordinate information of the sample oral cavity model in the three-dimensional face model based on the angle rotation parameter, the position translation parameter, the current coordinate information, coordinate information of the three-dimensional face model, and coordinate information of an average face model `S205`

Move the sample oral cavity model to a target position indicated by the target coordinate information `S206`

Obtain an expression parameter of the three-dimensional face model, and obtain an oral cavity opening and closing parameter of the sample oral cavity model based on the expression parameter of a linkage weight `S207`

Obtain a tongue stretching parameter and a tongue swinging parameter indicated by the expression parameter from an oral cavity expression parameter set `S208`

Perform form adjustment on an oral cavity form of the sample oral cavity model based on the oral cavity opening and closing parameter, the tongue stretching parameter, and the tongue swinging parameter `S209`

Perform brightness adjustment on an oral cavity brightness value of the sample oral cavity model subjected to the form adjustment by using a face skin color brightness value of the user picture to generate the target oral cavity model `S210`

Generate, based on the three-dimensional face model and the target oral cavity model, a three-dimensional face expression model corresponding to the user picture `S211`

Convert the three-dimensional face expression model into an expression picture corresponding to the user picture `S212`

Add the expression picture to an expression picture sequence corresponding to the user picture `S213`

Obtain, in a case of detecting that expression parameters corresponding to two adjacent frames of expression pictures in the expression picture sequence are discontinuous, continuous expression parameters between the expression parameters corresponding to the two adjacent frames of expression pictures `S214`

Insert, between the two adjacent frames of expression pictures, an expression picture corresponding to the continuous expression parameters `S215`

**Figure 6**

FIG. 7

FIG. 8

| | |
|---|---|
| Obtain an identity feature parameter of a face image in the user picture, and obtain coordinate information of the three-dimensional face model based on the identity feature parameter, the identity feature base, and coordinate information of an average face model | S301 |
| Calculate a first area of a projection of the coordinate information of the three-dimensional face model on a plane and a second area of a projection of the coordinate information of the average face model on the plane, and calculate a first ratio of the first area to the second area | S302 |
| Obtain target coordinate information of the sample oral cavity model in the three-dimensional face model based on the first ratio, the angle rotation parameter, the position translation parameter, and the current coordinate information | S303 |

FIG. 9

FIG. 10

a          b          c          d

FIG. 11

Select a feature point set at a specified position of the three-dimensional face model — S401

Obtain a skin color brightness value each of feature points in the feature point set in the user picture and a skin color brightness value of the feature point in a reference picture — S402

Calculate a second ratio of the skin color brightness value of the feature point in the user picture to the skin color brightness value of the feature point in the reference picture — S403

Perform brightness adjustment on an oral cavity brightness value of the sample oral cavity model based on the second ratio — S404

FIG. 12

FIG. 13

FIG. 14

FIG. 15

/ 1

```
┌─────────────────────────────────────────────────────────────┐
│                                                              │
│  ┌──────────────────┐ / 11                                   │
│  │Model obtaining   │                                        │
│  │unit              │                                        │
│  └──────────────────┘                                        │
│                                                              │
│  ┌──────────────────┐ / 12   ┌──────────────────┐ / 19       │
│  │Model registration│        │Picture insertion │            │
│  │unit              │        │unit              │            │
│  └──────────────────┘        └──────────────────┘            │
│                                                              │
│  ┌──────────────────┐ / 13   ┌──────────────────┐ / 18       │
│  │Form adjustment   │        │Picture detection │            │
│  │unit              │        │unit              │            │
│  └──────────────────┘        └──────────────────┘            │
│                                                              │
│  ┌──────────────────┐ / 15   ┌──────────────────┐ / 17       │
│  │Brightness        │        │Picture adding    │            │
│  │adjustment unit   │        │unit              │            │
│  └──────────────────┘        └──────────────────┘            │
│                                                              │
│  ┌──────────────────┐ / 14   ┌──────────────────┐ / 16       │
│  │Expression model  │        │Model conversion  │            │
│  │generating unit   │        │unit              │            │
│  └──────────────────┘        └──────────────────┘            │
│                                                              │
│            Face model processing apparatus                   │
└─────────────────────────────────────────────────────────────┘
```

FIG. 16

/ 11

```
┌─────────────────────────────────────┐
│                                      │
│  ┌──────────────────┐ / 111          │
│  │Face image        │                │
│  │obtaining subunit │                │
│  └──────────────────┘                │
│                                      │
│  ┌──────────────────┐ / 112          │
│  │Face model        │                │
│  │generating subunit│                │
│  └──────────────────┘                │
│                                      │
│         Model obtaining unit         │
└─────────────────────────────────────┘
```

FIG. 17

/ 12

| Parameter obtaining subunit | / 121 |
| Target information obtaining subunit | / 122 |
| Model moving subunit | / 123 |

Model registration unit

FIG. 18

/ 13

| First parameter obtaining subunit | / 131 |
| Second parameter obtaining subunit | / 132 |
| Form adjustment subunit | / 133 |

Form adjustment unit

FIG. 19

/ 15

```
┌─────────────────────────────────────────┐
│  ┌───────────────────────┐  / 151        │
│  │ Feature point selection│              │
│  │       subunit          │              │
│  └───────────────────────┘               │
│              │                            │
│  ┌───────────────────────┐  / 152        │
│  │   Brightness value     │              │
│  │  obtaining subunit     │              │
│  └───────────────────────┘               │
│              │                            │
│  ┌───────────────────────┐  / 153        │
│  │  Second ratio obtaining│              │
│  │       subunit          │              │
│  └───────────────────────┘               │
│              │                            │
│  ┌───────────────────────┐  / 154        │
│  │  Brightness adjustment │              │
│  │       subunit          │              │
│  └───────────────────────┘               │
│      Brightness adjustment unit           │
└─────────────────────────────────────────┘
```

FIG. 20

/ 1000

```
┌──────────────────────────────────────────────────────────────┐
│                    / 1001                     / 1005           │
│            ┌───────────────┐     ┌───────────────────────────┐ │
│            │   Processor   │     │     Operating system      │ │
│            └───────────────┘     ├───────────────────────────┤ │
│  / 1002                          │         Network           │ │
│                                  │  communication module     │ │
│  ────────────────┬───────────┬───┤                           │ │
│      / 1003      │   / 1004   │   │  User interface module    │ │
│  ┌─────────────┐ │ ┌────────┐ │   ├───────────────────────────┤ │
│  │User interface│ │ │Network │ │   │ Face model processing     │ │
│  │             │ │ │interface│ │   │  application program      │ │
│  │┌───────────┐│ │ └────────┘ │   └───────────────────────────┘ │
│  ││Display    ││ │            │            Memory               │
│  ││(Display)  ││ │            │                                 │
│  │└───────────┘│ │            │                                 │
│  │┌───────────┐│ │            │                                 │
│  ││Camera     ││ │            │                                 │
│  ││(Camera)   ││ │            │                                 │
│  │└───────────┘│ │            │                                 │
│  └─────────────┘ │       Electronic device                     │
└──────────────────────────────────────────────────────────────┘
```

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107657664 A